# EUROPEAN PATENT SPECIFICATION

(11) **EP 2 278 387 B1**
(45) Date of publication and mention of the grant of the patent: **01.07.2015**
(21) Application number: 08751711.6
(22) Date of filing: 13.05.2008
(51) Int. Cl.: G02C 7/04

(54) **CONTACT LENS**
KONTAKTLINSE
LENTILLE DE CONTACT

(43) Date of publication of application: 26.01.2011
(73) Proprietor: Menicon Co., Ltd., Nagoya-shi Aichi 460-0006 (JP)
(72) Inventor: HIBINO, Shingo, Kasugai-shi Aichi 487-0032 (JP); YAMAGUCHI, Hiroyuki, Nagoya-shi Aichi 460-0006 (JP); WATANABE, Motonari, Nagoya-shi Aichi 460-0006 (JP)
(74) Representative: Nicholls, Michael John
(86) International application number: PCT/JP2008/001193
(87) International publication number: WO 2009/139021

(56) References cited:
- EP-A1- 0 452 549
- EP-A1- 0 866 354
- EP-A1- 0 889 348
- WO-A2-02/48779
- JP-A- 6 289 329
- JP-A- 8 304 745
- JP-A- 2000 075 251
- JP-A- 2000 089 172
- JP-T- 2004 506 925
- US-A- 5 100 225
- US-A1- 2002 071 094

## Description

### TECHNICAL FIELD

The present invention relates generally to contact lenses inclusive of soft types and hard types, and relates in particular to a contact lens adapted for positioning the lens in the circumferential direction during wear.

### BACKGROUND ART

For contact lenses having an optical portion for correcting astigmatism or a bifocal optical portion for correcting presbyopia, it is sometimes necessary for the lens to be positioned correctly in the circumferential direction during wear. For example, toric lenses for correcting astigmatism must have consistently high conformance to specifications in terms of the relative positions of the astigmatism axis of the eye and the cylindrical axis of the lens. Also, in the field of near/far vision multifocal lenses and the like used for correcting presbyopia for example, lenses that employ lens designs of non-uniform lens power distribution in the circumferential direction about the optical axis also require correct positioning in the circumferential direction. For these particular types of contact lenses, both stable lens positioning in the circumferential direction and improved lens wear comfort are important required characteristics.

Known methods proposed in the past for positioning contact lenses in the circumferential direction during wear include the "truncation process" disclosed in Patent Document 1, the "prism ballast process" disclosed in Patent Document 2, and the "slab-off process" disclosed in Patent Documents 3 and 4. However, with these conventional methods, it was exceeding difficult to concomitantly achieve positioning in the circumferential direction and wear comfort of the contact lens at the required levels.

Specifically, the "truncation process" disclosed in Patent Document 1 involves giving the lens a linear profile in a chord direction at its outside lower edge so that the contact lens is positioned in the circumferential direction by being supported on the lower eyelid, but has the drawback of poor wear comfort owing to the fact that the two terminal edges of the linear segment of the lens outside lower edge which contacts the lower eyelid may irritate the eyelid. The "prism ballast process" disclosed in Patent Document 2 involves imparting prismatic power to the entire lens and increasing thickness towards the bottom so that the contact lens is positioned in the circumferential direction through the action of gravity, but this poses the risk of poor wear comfort caused by the thick lower edge of the lens due to the prism, as well as adverse effects of the prism on the optical portion resulting in poorer vision. The "slab-off process" disclosed in Patent Documents 3 and 4 involves providing a thin section at the lower part or at the upper and lower parts of the lens so that the contact lens is positioned in the circumferential direction through tucking under the eyelid, but due to individual differences in eyelid pressure, eyelid shape, and the like, it is difficult to achieve consistent circumferential positioning action, and in addition the larger lens size needed to ensure sufficient tucking under the eyelid tends to impair wear comfort.

Meanwhile, Patent Document 5 discloses a novel method for positioning a contact lens in the circumferential direction during wear. The contact lens disclosed in Patent Document 5 employs an arrangement whereby a pair of left and right thickened regions are formed in the peripheral region of the lens, these thickened regions being formed on a bias towards the bottom so that the lens center of gravity is lower with the aim of stabilizing the circumferential position of the lens, while at the two circumferential end edges of each thickened regions there are formed regions of varying thickness that become progressively thinner in circumferential direction towards thin sections so as to improve wear comfort.

However, research conducted by the inventors has shown that on a fundamental level, the contact lens disclosed in Patent Document 5 is focused merely upon stability of the lens circumferential position through the action of gravity on the pair of left and right thickened regions, and for this reason is not fully satisfactory in terms of concomitantly achieving stability of the lens circumferential position and improved wear comfort of the lens.

Specifically, the contact lens disclosed in Patent Document 5 requires that the thickened regions have ample thickness dimension or be formed on an extreme bias towards the bottom, in order to improve stability of the lens circumferential position. Actually, according to the specific structure disclosed in Patent Document 5, both left and right thickened regions are all formed exclusively to the lower side of the horizontal radial direction line of the lens. Naturally, larger thickness dimension of the thickened regions results in increased foreign body sensation against the eyelids and markedly impaired wear comfort. Additionally, the inventors found that increasing the thickness dimension of the thickened regions causes the thickened regions to either catch on the upper eyelid during blinking or to give rise to strong rubbing action, thereby imparting rotation to the lens, as well as destabilizing the lens circumferential position.

This problem remains fundamentally unresolved despite the variable thickness regions formed in the circumferential end sections of the thickened regions. Moreover, if the slope angle of the variable thickness regions is large and steep, the variable thickness regions do not readily provide the intended effect of improved wear comfort. On the other hand, if the slope angle of the variable thickness regions is small and moderate, it is difficult to establish a lower center of gravity and lens stability in the circumferential direction may suffer, while positioning of the lens in the circumferential direction through resting of the thickened regions on the lower eyelid may suffer, unavoidably resulting in problems such as appreciably reduced lens stability in the circumferential direction.
Patent Document 1: JP-U 48-13048
Patent Document 2: JP-A 2004-506925
Patent Document 3: JP-A 11-258553
Patent Document 4: JP-A 2000-89172
Patent Document 5: US Pat. No. 5100225

### DISCLOSURE OF THE INVENTION

### PROBLEM THE INVENTION ATTEMPTS TO SOLVE

With the foregoing in view, it is accordingly an object of the present invention to provide a contact lens of novel structure adapted to concomitantly provide greatly improved levels of lens stability in the circumferential direction and wear comfort.

### MEANS FOR SOLVING THE PROBLEM

The above objects of this invention may be attained according to at least one of the following modes of the invention. The features employed in each mode of the invention may be adopted at any possible optional combinations.

According to a first mode of the present invention there is provided a contact lens including an optical portion in a center section and a periphery portion situated peripherally thereto, wherein:
the optical portion is formed on front and rear surfaces devoid of a biased center of gravity resulting from creating a prism;
the periphery portion is provided with an upper thin portion and a lower thin portion formed to respectively extend with unchanging thickness dimension in a circumferential direction in sections that during wear are situated in opposition in a vertical direction, while being provided with a pair of thick portions having greater thickness dimension than the thin portions, which are formed to respectively extend with unchanging thickness dimension in the circumferential direction in sections that during wear are situated in opposition in a horizontal direction;
the pair of thick portions each extend in the circumferential direction to both upper and lower sides across a horizontal radial direction line that during wear extends in the horizontal direction, with the thick portions extending for a greater distance to the lower side than to the upper side of the horizontal radial direction line, thereby biasing downward a location of a gravity center of the thick portion;
upper transition portions are provided in sections to both circumferential sides of the upper thin portion such that the upper transition portions become progressively thinner going in the circumferential direction towards the upper thin portion from upper edges of the thick portions, respectively;
lower transition portions are provided in sections to both circumferential sides of the lower thin portion such that the lower transition portions become progressively thinner going in the circumferential direction towards the lower thin portion from lower edges of the thick portions, respectively;
the contact lens being characterised in that:
   the value of rate of thickness change in each lower transition portion expressed as a ratio of change in thickness dimension to circumferential length thereof, is greater than the value of rate of thickness change in each upper transition portion expressed as the ratio of change in thickness dimension to circumferential length thereof; and
   center angle: α of the upper transition portions about the lens center axis is within a range between 40 degrees and 60 degrees, and a center angle: β of the lower transition portions about the lens center axis is within a range between 30 degrees and 50 degrees.

According to the contact lens constructed in the above manner, positioning in the circumferential direction during wear arises synergistically through a combination of circumferential positioning action based on gravity due to the downward biased gravity center of both the left and right thick portions, lens circumferential direction positioning action produced by contact action during contact of the upper eyelid with the left and right thick portions at their upper edge, lens circumferential direction positioning action produced by pushing action when the upper eyelid extends over the left and right thick portions, and lens circumferential direction positioning action produced by contact action when the lower eyelid contacts the left and right thick portions at their lower edge. In particular, because the thick portions are respectively situated in peripheral sections at the left and right sides of the lens, positioning action in the lens circumferential direction produced by gravity and by the upper and lower eyelids gives rise to large rotational moment in the circumferential direction, and is exhibited very efficiently in a state of sideways equilibrium.

Particularly in the contact lens constructed according to the first mode of the present invention, because the pair of thick portions extend in the circumferential direction to both the upper and lower sides across the horizontal radial direction line that during wear extends in the horizontal direction, as compared for example with a design in which thick portions are formed exclusively to the lower side of the horizontal radial direction line as disclosed in Patent Document 5, the thick portions are assured to have a high proportion of mass of relative to the total mass of the lens without the need for a very large thickness dimension on the part of the thick portions, and it is possible to improve positional stability in the circumferential direction through counterbalancing action by the pair of left and right thick portions.

The thickness dimension of the thick portions in the contact lens varies in the lens circumferential direction, typically becoming progressively smaller towards the outside in the lens diametrical direction. Herein, comparisons of thickness dimensions of the thick portions, the thin portions, and the transition portions with one another represent comparisons of thickness dimension on a given circle about the lens geometric center. As a specific example, the teaching that the pair of thick portions have larger thickness dimension than the thin portions means that where their thickness dimensions are compared at locations equal distances away in the diametrical direction from the lens geometric center, the thick portions have larger thickness dimension than the thin portions.

Particularly in the contact lens constructed according to the first mode of the present invention, because the rate of thickness change in the lower transition portions that extend downward from the thick portions is greater than the rate of thickness change in the upper transition portions that extend upward from the thick portions, pushing action produced by the upper eyelid during blinking is directed onto the pair of left and right upper transition portions, thus affording further improvement in stability in the lens circumferential direction. That is, because the pair of left and right upper transition portions have relatively moderate slope, an effect of positioning the lens in the circumferential direction is produced through counterbalance of forces arising at the left and right sides from upper eyelid tending to push and slide the lens, in association with the eyelid progressively extending over the upper transition portions and then retracting in the opposite direction during blinking.

Additionally, during the positioning action of the upper transition portions in the circumferential direction which takes place during blinking, because the upper transition portions have relatively moderate slope, the problem of lens rotation caused by the upper eyelid becoming caught on the thick portions during blinking as disclosed in Patent Document 5 may be effectively avoided. At the same time, due to the relatively moderate slope of the upper transition portions, irritation caused by contact of the upper eyelid during blinking may be ameliorated, thereby affording good wear comfort.

On the other hand, because the lower transition portions have relatively steep slope, wedging of the thick portions under the lower eyelid may be reduced or prevented, thereby avoiding a situation in which the thick portions are in constant contact against the lower eyelid. As a result, high irritation caused by wedging of the thick portions under the lower eyelid may be prevented and good wear comfort may be maintained. Moreover, by imparting relatively steep slope to the lower transition portions to prevent them from wedging under the lower eyelid, if for some reason the lens experiences rotational displacement in the circumferential direction, the lower transition portions come into contact against the upper edge of the lower eyelid, thereby preventing further rotation in the circumferential direction. Further improvement in positional stability of the lens in the circumferential may be achieved for this reason.

Additionally, according to the present mode, by giving the thick portions a shorter dimension of upward extension in the circumferential direction, overlap between the upper eyelid and the thick portions may be avoided or minimized. In particular, as a result of extensive observation of the shape of the upper and lower eyelids and the cornea, the inventors discovered that even in the unblinking state, the upper eyelid typically covers a larger area of the cornea than does the lower eyelid. Thus, by adopting smaller dimensions for the circumferentially upward extending regions of the thick portions situated to the upper eyelid side during wear of the contact lens, overlap between the upper eyelid and the thick portions may be avoided or minimized, making it possible to obtain better wear comfort.

As will be appreciated from the preceding disclosure, on the basis of a characterizing feature of the present invention that combines the feature of respectively extending the pair of thick portions to both the upper and lower sides in the circumferential direction across a horizontal radial direction line that extends in the horizontal direction during wear, and the feature of making the rate of thickness change in the lower transition portions that extend downward from the thick portions greater than the rate of thickness change in the upper transition portions that extend upward from the thick portions, it is possible to achieve particular working effects that are not attainable according to the prior art disclosed in Patent Documents 1 to 5 for example, in which regard the technical significance of the invention should be obvious.

Additionally, with the contact lens constructed according to the present mode, because there is no need to form a prism or other such thickened region having a biased center of gravity location in the optical portion, the thickness dimension of the optical portion may be smaller, and the problem of diminished wear comfort encountered with the conventional prism ballast method as disclosed in Patent Document 2 may be avoided to provide good wear comfort and to concomitantly achieve greatly improved circumferential stability and wear comfort.

Further, according to the present mode, because the thick portions have unchanging thickness dimension in the circumferential direction, it is possible to avoid forming localized sections of markedly increased thickness dimension in the circumferential direction, and to afford better wear comfort. Moreover, because the thick portions have generally constant strength levels throughout their entirety in the circumferential direction, it is possible to ensure ample strength of the lens peripheral section throughout the entire length of extension of the thick portions, thereby improving the shape retention capability of the contact lens as well.

Additionally, because the thin portions have unchanging thickness dimension in the circumferential direction, it is possible to avoid forming thinner and weaker localized zones within the thin portions so as to ensure a certain minimum thickness dimension in the thin portions and efficiently ensure strength throughout the entire lens inclusive of the thin portions. It is also possible to lower the risk of diminished wear comfort due to localized irritation arising from localized differences in thickness of the thin portions when the eyelids cross over the thin portions. Further, because the thin portions have a thin profile with unchanging thickness along their entire circumferential length, it is possible for the thin portions to tuck under the eyelid over areas of considerable length in the circumferential direction, and to improve lens circumferential stability through this tucking action under the eyelid.

Moreover, because the present mode does not employ the prism ballast design, there are no adverse optical effects stemming from the optical portion being provided with a prism as in contact lenses employing conventional prism ballast designs. Specifically, according to the contact lens of the present mode, there are none of the adverse effects that arise from providing a large prism for the purpose of biasing the center of gravity (the conventional prism ballast design), and thus the intended vision correcting effect may be attained in the optical portion with a high degree of accuracy.

Further, in the contact lens constructed according to the present mode, by giving the thick portions greater extension towards the downward side relative to their extension to the upward side from the horizontal radial direction line, it is possible to impart vertical directionality. Thus, if the lens is inadvertently worn upside down, the wearer will experience an odd sensation, thus making it possible to prevent inadvertent wear upside down.

The contact lens constructed according to the present mode concomitantly affords greatly improved lens circumferential stability and lens wear comfort. Specifically, by selecting an angle of at least 40 degrees for the center angle: α of the upper transition portions, circumferential length of the upper transition portions across prescribed dimensions may be assured, and the upper transition portions may be imparted with moderate slope making improved wear comfort possible. Also, by selecting an angle of no more than 60 degrees for the center angle: α, appropriate relative circumferential length of the upper thin portion may be assured as well, and more effectively achieve circumferential stability through the lens pushing action of the upper eyelid against the thin portion.

The contact lens constructed according to the present mode concomitantly affords greatly improved lens circumferential stability and lens wear comfort. Specifically, by selecting an angle of at least 30 degrees for the center angle: α of the lower transition portions, circumferential length of the lower transition portions across prescribed dimensions may be assured so that mass counterbalancing action in cooperation with the thick portions may be produced more effectively, making possible further improvement in circumferential stability. Also, by selecting an angle of no more than 50 degrees for the center angle: α, appropriate relative circumferential length of the lower thin portion may be assured so as to more effectively achieve circumferential stability through the lens pushing action by the upper eyelid on the thin portion, and wear comfort may be further improved owing to reduced wedging under the lower eyelid.

A second mode of the present invention provides a contact lens according to the first mode wherein the center angle: β of the lower transition portions about a lens center axis is smaller than the center angle: α of the upper transition portions.

With the contact lens constructed according to the present mode, the circumferential length of the lower transition portions is shorter than the circumferential length of the upper transition portions, and it is a simple matter to design the circumferential rate of thickness change in the lower transition portions to be greater than the circumferential rate of thickness change in the upper transition portions. The upper transition portions, owing to their relatively greater circumferential length, are more effectively exposed to pushing action by the upper eyelid during blinking; and owing to their moderate change in thickness, irritation during contact by the upper eyelid may be reduced so as to achieve further improvement in wear comfort.

A third mode of the present invention provides a contact lens according to the first or second mode wherein the center angle: ζ of the lower thin portion about the lens center axis is smaller than the center angle: ε of the upper thin portion.

In the contact lens constructed according to the present mode, by making the lower thin portion shorter in circumferential length, it is a simple matter to design the thick portions with a circumferentially downward extension dimension that is greater relative to their upward extension dimension. This makes it even easier to establish a level of downward bias of the gravity center of the thick portions. Also, owing to a reduced extent of wedging of the lower thin portion under the lower eyelid, wear comfort is further improved.

A further mode of the present invention provides a contact lens according any one of the further modes wherein the elevation angle: γ of the circumferential upper edge of the thick portions about the lens center axis with respect to the horizontal radial direction line is within a range between 10 degrees and 30 degrees.

As a result of extensive examination of the morphology of the human eye, the inventors have discovered that at normal times with the upper and lower eyelids open, the elevation angle at which the upper eyelid and the cornea intersect about the geometric center of the cornea averages approximately 30 degrees. Accordingly, by designing the shape of the thick portions of the lens to conform to this particular morphology, it is possible to provide a contact lens that matches the morphology of the eye (particularly the location of the upper eyelid on the cornea), and to afford better wear comfort and circumferential stability. In the present mode, the elevation angle: γ is preferably no more than 20 degrees.

A further mode of the present invention provides a contact lens according any of the first to sixth modes wherein the depression angle: δ of the circumferential lower edge of the thick portions about the lens center axis with respect to the horizontal radial direction line is within a range between 20 degrees and 60 degrees.

As a result of extensive examination of the morphology of the human eye, the inventors have discovered that at normal times with the upper and lower eyelids open, the depression angle at which the lower eyelid and the cornea intersect about the geometric center of the cornea averages approximately 70 degrees. Accordingly, by designing the shape of the thick portions of the lens to conform to this particular morphology, it is possible to provide a contact lens that matches the morphology of the eye (particularly the location of the lower eyelid on the cornea), and to afford better wear comfort and circumferential stability. Specifically, wedging of the thick portions under the lower eyelid, in combination with the fact that lower eyelid pressure is stronger relative to upper eyelid pressure, poses a risk of diminished wear comfort and of reduced circumferential stability caused by pushing action by the lower eyelid. Accordingly, by adopting a depression angle for the thick portions that is smaller than the depression angle at which on average the lower eyelid and the cornea intersect in the human eye, wedging of the thick portions under the lower eyelid may be minimized, making possible better wear comfort and circumferential stability. In the present mode, the depression angle: δ is preferably no more than 40 degrees.

A fourth mode of the present invention provides a contact lens according any of the earlier modes wherein the differential between the thickness dimension: Ta in the thick portions and the thickness dimension: Tb in the upper thin portion lies in a range between 0.20 mm and 0.45 mm.

The contact lens constructed according to the present mode concomitantly affords greatly improved lens circumferential stability and lens wear comfort. Specifically, by adopting a value of at least 0.20 mm for the differential between the thickness dimension of the thick portions and the thickness dimension of the upper thin portion, relative thickness of the thick portions and relative thinness of the upper thin portion in the lens periphery portion may be effectively assured, and concomitant pushing action of the upper eyelid against the thick portions and tucking of the upper thin portion may be produced more effectively, making it possible to achieve circumferential stability more effectively. On the other hand, by keeping the differential between the thickness dimension of the thick portions and the thickness dimension of the upper thin portion to no more than 0.45 mm, an excessively steep rate of thickness change in the upper transition portions which connect the thick portions with the upper thin portion may be avoided, and irritation caused by contact of the upper eyelid against the upper transition portions may be minimized, making improved wear comfort possible.

A fifth mode of the present invention provides a contact lens according any one of the earlier modes wherein the differential between the thickness dimension: Ta in the thick portions and the thickness dimension: Tc in the lower thin portion lies in a range between 0.20 mm and 0.45 mm.

The contact lens constructed according to the present mode concomitantly affords greatly improved lens circumferential stability and lens wear comfort. Specifically, by adopting a value of at least 0.20 mm for the differential between the thickness dimension of the thick portions and the thickness dimension of the lower thin portion, relative thickness of the thick portions and relative thinness of the lower thin portion in the lens periphery portion may be effectively assured, and concomitant pushing action of the upper eyelid against the thick portions and tucking of the lower thin portion may be produced more effectively, making it possible to achieve circumferential stability more effectively. On the other hand, by keeping the differential between the thickness dimension of the thick portions and the thickness dimension of the lower thin portion to no more than 0.45 mm, an excessively steep rate of thickness change in the lower transition portions which connect the thick portions with the lower thin portion may be avoided, and irritation caused by contact of the lower eyelid against the lower transition portions may be minimized, making improved wear comfort possible.

A sixth mode of the present invention provides a contact lens according any one of the earlier modes wherein the thickness dimension: Ta in the thick portions lies in a range between 0.30 mm and 0.55 mm.

In the contact lens constructed according to the present mode, pushing action by the upper eyelid against the thick portions and mass counterbalancing action on the part of the thick portions is produced more effectively, thereby affording lens circumferential stability more effectively as well as avoiding excessive contact of the upper eyelid against the thick portions so as to afford better wear comfort.

An seventh mode of the present invention provides a contact lens according any one of the earlier modes wherein the thickness dimension: Tb in the upper thin portion lies in a range between 0.10 mm and 0.20 mm.

A eighth mode of the present invention provides a contact lens according to any one of the first to eleventh modes wherein the thickness dimension: Tc in the lower thin portion lies in a range between 0.10 mm and 0.20 mm.

According to the seventh and eighth modes, keeping the thickness dimension of the upper and/or lower thin portions to 0.20 mm or less, foreign body sensation caused by the thin portions wedging under the upper eyelid or the lower eyelid may be mitigated more effectively to attain improved wear comfort. Also, by establishing a value of at least 0.10 mm for the thickness dimension of the upper and/or lower thin portions, it is possible to ensure strength of shape retention of the lens as a whole by the lens peripheral section, so that the shape retention properties of the lens do not suffer.

A further mode of the present invention provides a contact lens according to any one of the earlier modes wherein the thickness dimension: Tb of the upper thin portion is smaller than the thickness dimension: Tc of the lower thin portion.

The contact lens constructed according to the present mode affords improved wear comfort. Specifically, numerous observations of the shape of the upper and lower eyelids and the cornea of the eye led the inventors to discover that the upper eyelid typically covers a larger area of the cornea than does the lower eyelid. As a result of extensive testing carried out on the basis of this discovery, it was found that by giving the upper thin portion of the contact lens smaller thickness dimension than the thickness dimension of the lower thin portion, it is possible to minimize irritation of the upper eyelid when the upper eyelid and the upper thin portion overlap, so that better wear comfort may be afforded. That is, with respect to wear comfort, the upper thin portion is more important than the lower thin portion, and for this reason improved wear comfort may be achieved by making the upper thin portion thinner than the lower thin portion, while providing the lower thin portion with a certain thickness dimension so as to ensure lens strength in cooperation with the left and right thick portions.

A ninth mode of the present invention provides a contact lens according to any one of the earlier modes wherein the rate of thickness change in the upper transition portions in the circumferential direction about the lens center axis lies in a range between 0.30 × 10⁻² mm/degree and 1.0 × 10⁻² mm/degree.

In the contact lens constructed according to the present mode, by selecting an appropriate rate of thickness change for the upper transition portions, it is possible to concomitantly achieve in a more effective manner the above-described effects afforded by the upper transition portions, namely, circumferential positioning action by the upper eyelid, and reduced irritation of the upper eyelid. In the present mode, where the thickness dimension of the thick portions which extend with unchanging thickness in the circumferential direction is designated as Ta and the thickness dimension of the upper thin portion is designated as Tb, the upper transition portions constitute areas that extend from a location at the lower end at which the thickness dimension goes to Ta to a location at the upper end at which the thickness dimension goes to Tb; and where the center angle of the upper transition portions in the circumferential direction about the lens geometric center is designated as α, the rate of thickness change in the upper transition portions is expressed by (Ta - Tb)/α.

A tenth mode of the present invention provides a contact lens according to any one of the earlier modes wherein the rate of thickness change in the lower transition portions in the circumferential direction about the lens center axis lies in a range between 0.60 × 10⁻² mm/degree and 1.50 × 10⁻² mm/degree.

In the contact lens constructed according to the present mode, by selecting an appropriate rate of thickness change for the lower transition portions, it is possible to more effectively achieve the above-described effects afforded by the lower transition portions above, namely, the effect of inhibiting lens rotation in the circumferential direction through contact with the lower eyelid and the effect of minimizing wedging of the lower transition portions under the lower eyelid, so as to achieve significant concomitant improvements in circumferential stability of the contact lens during wear and in wear comfort. In the present mode, where the thickness dimension of the thick portions which extend with unchanging thickness in the circumferential direction is designated as Ta and the thickness dimension of the lower thin portion is designated as Tc, the lower transition portions constitute areas that extend from a location at the upper end at which the thickness dimension goes to Ta to a location at the lower end at which the thickness dimension goes to Tc; and where the center angle of the lower transition portions in the circumferential direction about the lens geometric center is designated as β, the rate of thickness change in the lower transition portions is expressed by (Ta - Tc)/β.

An eleventh mode of the present invention provides a contact lens according any of the earlier modes wherein the differential between the rate of thickness change in the upper transition portions in the circumferential direction and the rate of thickness change in the lower transition portions in the circumferential direction about the lens center axis lies in a range between 0.10 × 10⁻² mm/degree and 0.60 × 10⁻² mm/degree.

With the contact lens constructed according to the present mode, it is possible to achieve significant concomitant improvement of stability in the lens circumferential direction and wear comfort. Specifically, by selecting a value of at least 0.10 × 10⁻² mm/degree for the differential between the rate of thickness change in the upper transition portions and the rate of thickness change in the lower transition portions, the lower transition portions can be given sharper thickness variation than in the upper transition portions, to consistently give rise to the effect of preventing the lower transition portions from wedging under the lower eyelid as described previously, with the resultant effect of preventing rotation in the circumferential direction; while by selecting a value of no more than 0.60 × 10⁻² mm/degree for the differential between the rate of thickness change in the upper transition portions and the rate of thickness change in the lower transition portions, excessive difference of thickness variation between the upper transition portions and the lower transition portions can be avoided and the risk of impaired wear comfort can be minimized.

A twelfth mode of the present invention provides a contact lens according any of the earlier modes wherein the periphery portion is formed within a range of between 0.5 mm and 2.0 mm from the lens outside peripheral edge in a lens radial direction.

In the contact lens constructed according to the present mode, by forming the periphery portion in a range of at least 0.5 mm from the lens outside peripheral edge in the lens radial direction, sufficient radial dimension of periphery portion, and hence sufficient radial width dimension of the thick portions and thin portions which are formed in the periphery portion, may be assured so as to ensure mass member counterbalancing action on the part of the thick portions and sufficient strength of the thin portions; while by forming the periphery portion in a range of no more than 2.0 mm from the lens outside peripheral edge in the lens radial direction, it is possible to avoid adverse effects on the region where the optical portion is formed.

A thirteenth mode of the present invention provides a contact lens according to any one of the earlier modes wherein the upper transition portions and the lower transition portions are respectively composed of a circumferential center section having a constant rate of thickness change in the circumferential direction about the lens center axis, and connecting sections situated to either circumferential side of the circumferential center section and having a variable rate of thickness change that progressively decreases in the circumferential direction so as to connect smoothly with the thick portions and with the thin portions respectively.

In the contact lens constructed according to the present mode, because the upper transition portions and the lower transition portions respectively connect smoothly with the thick portions and with the thin portions at their connecting sections (i.e. through connecting faces with a common tangent), it is possible to advantageously avoid problems such as diminished wear comfort caused by localized irritation associated with formation of edge-like inflection points that extend with a linear profile in the radial direction, and the resultant appearance of lines visible on the lens exterior. Further, the risk of the upper eyelid catching on the connecting sections of the upper or lower transition portions with the thick portions or thin portions during blinking may be reduced; and because the circumferential center section has a constant rate of thickness change, the upper eyelid may progressively extend over and retract from the upper transition portions and the lower transition portions in a smooth manner during blinking. Good wear comfort may be afforded thereby, and unwanted rotation in the circumferential direction due to catching may be minimized, to provide higher stability in the circumferential direction.

A further mode of the present invention provides a contact lens according to any one of the earlier modes wherein the thick portions and the thin portions are formed in an outside peripheral edge of the periphery portion; and in the periphery portion, a radial transition portion that smoothly connects an outside peripheral edge of the optical portion to the thick portions and to the thin portions is formed to an inside peripheral side of the outside peripheral edge where the thick portions and the thin portions are formed.

In the contact lens constructed according to the present mode, by forming the thin portions at the outside peripheral edge of the lens which is frequently crossed over by the upper and lower eyelids, wear comfort may be further improved; and because the thick portions which are situated in opposition to one another to the left and right sides of a generally diametrical axis to either side of the contact lens center are assured of separation by a large distance in the horizontal direction, the mutual counterbalancing action of the thick portions may be expressed more effectively to provide improved circumferential stability.

Additionally, because the outside peripheral edge of the optical portion connects smoothly (i.e. through connecting faces with a common tangent) with the thick portions and the thin portions in the lens radial direction, it is possible to advantageously avoid problems such as diminished wear comfort arising from edge-like inflection points that extend with a linear profile in the circumferential direction through boundary sections, and the resultant appearance of ring-shaped lines visible on the lens exterior. A radial transition portion that meets these conditions may be achieved through radial cross-sectional profiles that are defined for example by a quadratic or higher polynomial function, or at least one of a conical curve or spline curve or some combination thereof.

A further mode of the present invention provides a contact lens according to the previous mode wherein the periphery portion is composed of a first periphery portion to an inner peripheral side and a second periphery portion to an outer peripheral side; the first periphery portion constitutes the radial transition portion; and the thick portions and the thin portions are respectively formed with unchanging radial width dimensions in the second periphery portion.

In the contact lens constructed according to the present mode, by endowing the thick portions and the thin portions with unchanging radial width dimension, further improvements in circumferential stability and good wear comfort may be consistently attained. Also, by imparting unchanging width dimension to both the thick portions and the thin portions that are formed at the lens outside peripheral edge, localized concentrations of stress and strain in the thick portions or thin portions may be avoided to afford further improvement in lens shape retention properties in the periphery portion where the thick portions and thin portions are formed.

A further mode of the present invention provides a contact lens according to any one of the earlier modes wherein the optical portion is endowed with aspherical contours to establish a specific radial axis in relation to optical characteristics on a face of the lens; on the same face the periphery portion is likewise endowed with aspherical contours; and the thick portions and the thin portions are formed in the periphery portion through variation of the thickness dimension in the circumferential direction.

In the contact lens constructed according to the present mode, an optical portion having optical directionality and a periphery portion of specified directionality during wear may be formed on the same face. Specifically, in the lens mold die that defines the lens mold cavity when the lens front face die and the lens rear face die are registered, both circumferential directionality in the optical portion and circumferential directionality in the periphery portion are specified on the same die, so there is no need to consider relative misalignment of circumferential directionality in the optical portion and circumferential directionality in the periphery portion when registering the lens front face die and the lens rear face die. For this reason, during lens manufacture, optical portion directionality in the circumferential direction and periphery portion directionality in the circumferential direction may be aligned with a high degree of accuracy, without the need for any special measures.

In the present mode, the face endowed with aspherical contours may be either the front face or rear face of the lens. In preferred practice, both the optical portion and the periphery portion are endowed with aspherical surface contours on either the lens front face or the lens rear face to establish optical portion directionality in the circumferential direction and periphery portion directionality in the circumferential direction; while on the other of the lens front face or the lens rear face, the optical portion and the periphery portion are endowed with a surface defined by a body of revolution about the center axis. This obviates the need for the face for molding the lens front face and the face for molding the lens rear face to be relatively positioned in the circumferential direction, to achieve a simpler contact lens manufacturing process.

A further mode of the present invention provides a contact lens according the previous mode wherein the face on which the optical portion has aspherical contours and the face on which the periphery portion has aspherical contours are both the concave rear face that is produced by mold forming.

In the contact lens constructed according to the present mode, because both the aspherical contours of the optical portion and the aspherical contours of the periphery portion are produced on the rear face, it is a simple matter to align the optical portion and the periphery portion (i.e. the thick portions and the thin portions) in the circumferential direction. Moreover, the die for shaping the lens front face may be used in conjunction with several dies for shaping the lens rear face, and because alignment with the lens front face in the circumferential direction is unnecessary, production steps such as mold registration are easier.

A further mode of the present invention provides a contact lens according to any one of the earlier modes wherein the pair of thick portions and the upper and lower thin portions, inclusive of the transition portions situated therebetween in the circumferential direction, are line-symmetric in shape in relation to a plumb radial direction line extending in the vertical direction during wear.

In the contact lens constructed according to the present mode, horizontal weight balance may be established with higher precision for the lens peripheral sections in which the thick portions, the thin portions, and the transition portions are formed, thus affording further improved lens positioning effect in the circumferential direction through the action of gravity and action arising from contact of the upper and lower eyelids depending on morphology.

A further mode of the present invention provides a contact lens according to the previous mode wherein an entire lens inclusive of the optical portion and the periphery portion is line-symmetric in shape in relation to the plumb radial direction line.

In the contact lens constructed according to the present mode, because the entire lens is horizontally symmetrical in shape, manufacture of the contact lens is simpler, and there is no need to distinguish between left and right during wear.

A further mode of the present invention provides a contact lens according to any one of the previous modes wherein the optical portion is either a toric lens, a bifocal lens, or a multifocal lens.

Highly accurate positioning and stability of the optical portion in the circumferential direction are requirements of toric lenses which are used to correct astigmatism, or of bifocal lenses with dual focal points for near and far vision, as well as of multifocal lenses with a greater number of focal points. For example, it is necessary for a toric lens to have highly accurate and consistent conformance to specifications in terms of the relative positions of the astigmatism axis of the eye and the cylindrical axis of the optical portion of the lens. Accordingly, the present invention is especially advantageous for implementation in such lenses, and through implementation of the present invention it is possible to improve the accuracy of positioning of the lens in the circumferential direction during wear while at the same time ensuring good wear comfort, so that the desired correction may be consistently produced. The use of optical portions that appropriately combine toric with bifocal or multifocal, or with a spherical diopter power or prism, are also possible, and such lenses may be included in the present mode.

### BRIEF DESCRIPTION OF THE DRAWINGS

FIG. 1 is a front view of a contact lens according to an embodiment of the present invention.
FIG. 2 is a sectional view taken along line 2-2 of FIG. 1.
FIG. 3 is a sectional view taken along line 3-3 of FIG. 1.
FIG. 4 is an illustration depicting thickness variation of a periphery portion of the contact lens shown in FIG 1.
FIG. 5 is a sectional view depicting dies for manufacture of the contact lens.
FIG. 6 is an illustration depicting wear of the contact lens.
FIG. 7 is an illustration depicting thickness variation of the periphery portion of a contact lens according to a different mode of the invention.
FIG. 8 is a birds-eye view showing thickness distribution of a contact lens of Embodiment 1 designed according to the present invention.
FIG 9 is a birds-eye view showing thickness distribution of a contact lens of Comparative Example 1 designed according to the prior art.

### KEYS TO SYMBOLS

- 10: contact lens
- 26: optical portion
- 31: periphery portion
- 42: upper thin portion
- 44: lower thin portion
- 50: thick portions
- 52: upper transition portions
- 54: lower transition portions

### BEST MODE FOR CARRYING OUT THE INVENTION

A fuller understanding of the present invention is provided by the following detailed description of the embodiments of the invention, making reference to the accompanying drawings.

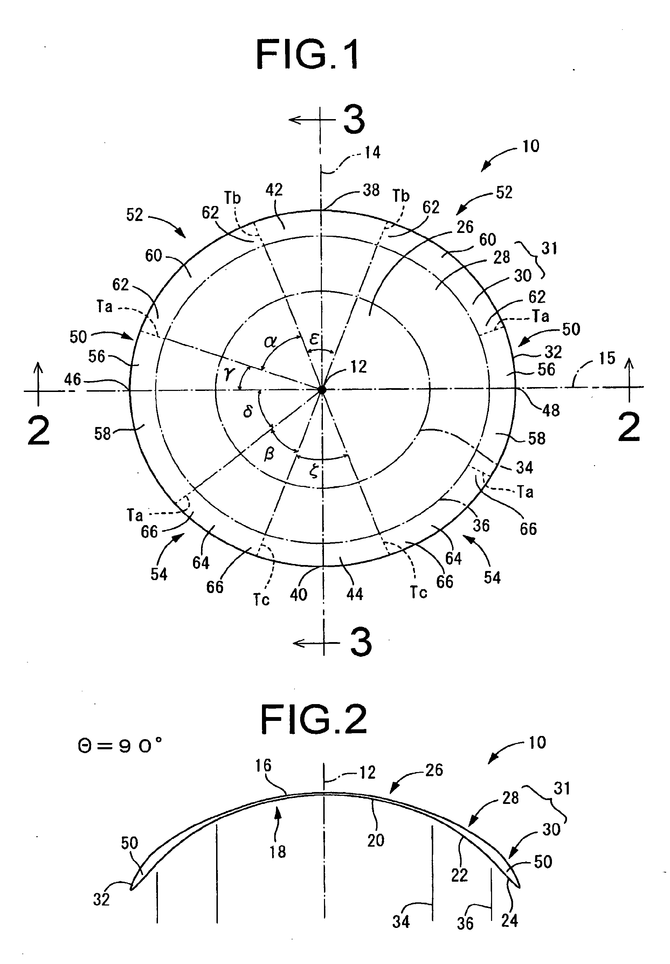

First, a contact lens 10 constructed in accordance with the present invention is depicted in FIGS. 1 to 3. The contact lens 10 has a fragmentary, generally spherical shell shape overall, and naturally is intended to be used worn over the surface of the cornea of the eye. While the present invention is applicable to contact lenses of either soft type or hard type, the contact lens 10 of the present embodiment is a contact lens of soft type. No particular limitation is imposed as to the material, which may be a conventional known hydrated material such as PHEMA (polyhydroxyethyl methacrylate) or PVP (polyvinyl pyrrolidone), or a non-hydrated material such as acrylic rubber or silicone.

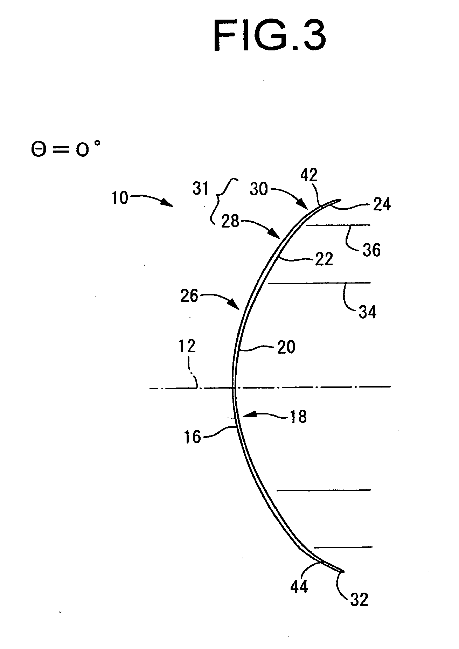

Turning to a detailed description, the contact lens 10 of the present embodiment has line-symmetric shape in relation to a single plumb radial direction line 14 passing through the lens geometric center axis 12 which is the center axis of the lens shape; during wear this plumb radial direction line 14 is generally aligned with the plumb direction. A horizontal radial direction line 15 which is a radial line passing through the lens geometric center axis 12 and orthogonally intersecting the plumb radial direction line 14 is generally aligned with the horizontal direction during wear. FIGS. 2 and 3, which depict the lens in radial cross section, show two sections taken at θ = 0 degrees (FIG. 3) and 90 degrees (FIG. 2) in the circumferential direction about the lens geometric center axis 12, where the top on the plumb radial direction line 14 in FIG. 1, which constitutes the axis of symmetry, is designated as the reference point (θ=0 degrees).

Additionally, the contact lens 10 of the present embodiment is circular in shape in front view as depicted in FIG. 1, and has a generally convex spherical lens front face 16 and a generally concave aspherical lens rear face 18. Here, the radial cross sectional profile of the lens front face 16 may have any of a number of different profiles including ones defined by high order polynomial equations; in the present embodiment in particular, the lens front face 16 has a convex, generally arcuate cross section with generally unchanging curvature radius. Meanwhile, the lens rear face 18 is formed with aspherical shape, and is composed of an optical portion rear face 20 of circular shape in front view, a first periphery portion rear face 22 of annular shape, and a second periphery portion rear face 24 of annular shape. These regions 20, 22, 24 are formed in that order from the inside peripheral side towards the outside peripheral side in the radial direction, and their circular peripheral edges are concentrically centered on the lens geometric center axis 12.

In terms of structure the contact lens 10 is thereby provided with an optical portion 26 the lens rear face of which is defined by the optical portion rear face 20, a first periphery portion 28 the lens rear face of which is defined by the first periphery portion rear face 22, a second periphery portion 30 the lens rear face of which is defined by the second periphery portion rear face 24, and an edge portion 32 situated at the outmost edge and connecting the lens front and rear faces. Specifically, the optical portion 26 is formed in the lens center section, the first periphery portion 28 is formed peripherally outward from the optical portion 26, and the second periphery portion 30 is formed peripherally outward from the first periphery portion 28. The first periphery portion 28 and the second periphery portion 30 make up a periphery portion 31. In preferred practice, the periphery portion 31 is formed within a range between 0.5 mm and 2.0 mm from the lens outside peripheral edge in the radial direction, more preferably within a range between 0.7 mm and 1.7 mm from the lens outside peripheral edge. If the periphery portion 31 is formed in a range less than 0.5 mm from the lens outside peripheral edge in the lens radial direction, the radial width dimensions of thick portions 50 and upper and lower thin portions 42, 44, which are discussed later, are too small, posing a risk of not ensuring counterbalancing action of the thick portions 50 and adequate strength of the upper and lower thin portions 42, 44, discussed later; whereas if the periphery portion 31 is formed in a range more than 2.0 mm from the lens outside peripheral edge in the lens radial direction, the optical portion 26 formation zone will be too small, posing a risk of not attaining satisfactory vision correction.

For the optical portion rear face 20 there is employed a spherical face or aspherical face with an appropriate curvature radius so as to produce the required optical characteristics for vision correction in cooperation with the lens front face 16, e.g. a particular lens diopter power at a single focal point or at two or more focal points. The present invention may be advantageously implemented in contact lenses for correcting astigmatism, in which the required optical characteristics for correcting astigmatism may be imparted to the optical portion 26 through combinations of cylindrical lens faces on at least one of the lens front face 16 and the optical portion rear face 20 to produce the appropriate cylindrical diopter power on the appropriate cylindrical axis angle.

In the present embodiment in particular, a toric face on which a particular radial axis has been established in relation to optical characteristics is formed on the optical portion rear face 20; and the optical portion 26 is constituted as a toric lens by virtue of the lens front face 16 and the optical portion rear face 20 being formed on the same lens geometric center axis 12. However, it is also possible for the optical portion 26 to be a bifocal lens with two focal points, or a multifocal lens with multiple focal points numbering three or more, for example. In the present embodiment in particular, in the optical portion 26 the lens front face 16 and the optical portion rear face 20 are formed on the same lens geometric center axis 12 so that the geometric center axis of the optical portion 26 is coincident with the lens geometric center axis 12. At the same time, the optical portion 26 has generally equal thickness dimensions at symmetrical locations in relation to the lens geometric center axis 12 so that the location of the gravity center of the optical portion 26 is situated approximately on the geometric center axis of the optical portion 26. From the above it will be appreciated that according to the present embodiment, the optical portion 26 of the contact lens 10 lacks a prism provided for the purpose of biasing the gravity center downward to stabilize the circumferential position.

Meanwhile, as neither the first periphery portion 28 or the second periphery portion 30 have adverse effects on optical characteristics, their shapes may be established without any constraints imposed by the required optical characteristics. Accordingly, it is possible for the shape of the first periphery portion rear face 22 and of the second periphery portion rear face 24 to be established such that the contact lens 10 has good wear comfort and positional stability during wear.

Specifically, while this first periphery portion rear face 22 and second periphery portion rear face 24 may be endowed with any desired contours, considerations such as ease of operation in design and production make it preferable to adopt for the first periphery portion rear face 22 a radial cross sectional profile that is defined by a quadratic or higher polynomial expression, or at least one of a conical curve or a spline curve or some combination thereof; and to adopt for the second periphery portion rear face 24 a radial cross sectional profile that is defined by an arcuate shape or a quadratic curve.

In preferred practice, in order to achieve further improvement in wear comfort, the first periphery portion rear face 22 and the second periphery portion rear face 24 each have a smooth profile devoid of inflection points as viewed in the lens radial cross sectional profile. Ideally, substantially the entire the lens rear face 18 (which includes lens rear faces of a first junction 34 at the connection point of the optical portion rear face 20 with the first periphery portion rear face 22, and of a second junction 36 at the connection point of the first periphery portion 28 with the second periphery portion 30) has a continuously varying slope angle of tangents in the radial direction, producing a continuous smooth profile devoid of edge-like inflection points.

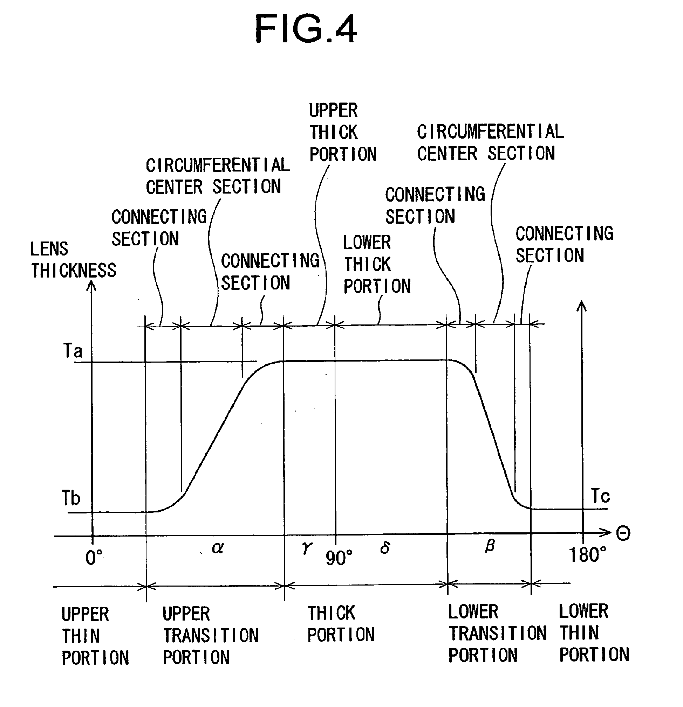

The profile of the second periphery portion rear face 24 is designed with varying thickness dimension of the second periphery portion 30 in the circumferential direction. FIG 4 depicts in model form variation in the thickness dimension of the second periphery portion 30 in the circumferential direction. In the present embodiment, the second periphery portion 30 incorporates an upper thin portion 42 and a lower thin portion 44 that include plumb direction upper and lower edge parts 38, 40 and that form zones of relative thinness extending with prescribed circumferential dimensions about the circumference of the second periphery portion 30. Also incorporated therein are a pair of thick portions 50 having greater thickness dimension than the upper and lower thin portions 42, 44, that include horizontal direction left and right edge portions 46, 48 and that form zones of relative thickness extending with prescribed circumferential dimensions about the circumference of the second periphery portion 30.

At two locations between the upper thin portion 42 and the thick portions 50, 50 in the circumferential direction of the second periphery portion 30 there are respectively formed upper transition portions 52 having gradually varying thickness dimension from the upper thin portion 42 towards the thick portions 50, 50; and at two locations between the lower thin portion 44 and the thick portions 50, 50 there are respectively formed lower transition portions 54 having gradually varying thickness dimension from the lower thin portion 44 towards the thick portions 50, 50.

While no particular limitation is imposed with regard to width dimension in the lens radial direction of these upper and lower thin portions 42, 44, thick portions 50, and upper and lower transition portions 52, 54, in the present embodiment, each of the portions is formed with unchanging radial width dimension, in other words, the second periphery portion 30 is formed with unchanging radial width dimension about the entire circumference. With this design, the upper and lower thin portions 42, 44, the thick portions 50, and the upper and lower transition portions 52, 54 extend in the circumferential direction with unchanging radial width dimension through the second periphery portion 30 that constitutes the outside peripheral edge part of the periphery portion 31.

The pair of thick portions 50, 50 that are situated to left and right of the lens are symmetrical to either side of the plumb radial direction line 14, and extend with prescribed dimensions to the circumferential upper and lower sides of the second periphery portion 30 across the horizontal radial direction line 15 which passes over the left and right edge portions 46, 48. The radial cross sectional profile of each thick portion 50 reaches maximum thickness at the location of the second junction 36 at the connection point with the first periphery portion 28, and becomes progressively thinner in continuous fashion towards the edge portion 32.

The circumferential upper and lower edges of the thick portions 50 are defined by a prescribed boundary thickness dimension (hereinafter termed simply thickness dimension): Ta. As will be appreciated from FIG 4, the thick portions 50 have unchanging thickness dimension: Ta along their entire circumferential extension. Specifically, the thickness dimension: Ta of the thick portions 50 is preferably within a range between 0.30 mm and 0.55 mm, more preferably within a range between 0.33 mm and 0.52 mm. Pushing action by the upper eyelid during blinking and mass counterbalancing action by the thick portions 50 may be produced more effectively with this design, thereby affording effective stability of the lens circumferential position, and avoiding excessive contact of the upper eyelid against the thick portions 50 so as to afford better wear comfort. In the present embodiment, the thickness dimension: Ta = 0.45 mm.

Further, as mentioned previously, the circumferential upper and lower edges of the thick portions 50 are defined by a particular thickness dimension: Ta, and according to the present embodiment the elevation angle: γ coincident with the location of Ta to the upper side and the depression angle: δ coincident with the location of Ta to the lower side about the lens geometric center axis 12 have the relationship elevation angle: γ < depression angle: δ. That is, according to the present embodiment, in the thick portions 50 the circumferential dimension of upper thick portions 56 situated above the left and right edge portions 46, 48 which lie on the horizontal radial direction line 15 differ from the circumferential dimension of lower thick portions 58 situated below the left and right edge portions 46, 48, with the circumferential dimension of lower thick portions 58 being greater than the circumferential dimension of upper thick portions 56. According to this feature, the thick portions 50 are endowed with downward-extending shapes whose extension in the downward direction is greater than their extension in the upward direction in relation to the horizontal radial direction line 15, thus giving the lower thick portions 58 larger volume than the upper thick portions 56 so that the respective gravity centers of the pair of thick portions 50 situated at right and left of the contact lens 10 are biased circumferentially downward with respect to the left and right edge portions 46, 48.

The elevation angle: γ is preferably selected within a range between 10 degrees and 30 degrees, more preferably within a range between 15 degrees and 20 degrees. By so doing the contours of the upper thick portions 56 will conform to the shape of the eye of the greatest possible number of wearers, and with the eyelids open the upper eyelid will be able to retract off from the upper thick portions 56, thereby avoiding the risk of the upper eyelid constantly riding over the upper thick portions 56 so that wear comfort is improved. In the present embodiment, the elevation angle: γ is set to 20 degrees.

The depression angle: δ is preferably selected within a range between 20 degrees and 60 degrees, more preferably within a range between 30 degrees and 40 degrees. By so doing the contours of the lower thick portions 58 will conform to the shape of the eye of the greatest possible number of wearers, thus reducing the risk of the lower thick portions 58 wedging under the lower eyelid so that wear comfort is improved. In the present embodiment, the depression angle: δ is set to 40 degrees.

Meanwhile, the upper and lower thin portions 42, 44 are symmetrical about the plumb radial direction line 14 and are formed in the second periphery portion 30 with prescribed circumferential dimensions centered on the upper and lower edge parts 38, 40. The radial cross sectional profile of the upper and lower thin portions 42, 44 reaches maximum thickness at the location of the second junction 36 at the connection point with the first periphery portion 28, and becomes progressively thinner in continuous fashion towards the edge portion 32.

The circumferential left and right edges of the upper thin portion 42 are defined by a prescribed thickness dimension: Tb, while the circumferential left and right edges of the lower thin portion 44 are defined by a prescribed thickness dimension: Tc. As will be appreciated from FIG 4, the upper thin portion 42 has unchanging thickness dimension: Tb along its entire circumferential extension, while the lower thin portion 44 has unchanging thickness dimension: Tc along its entire circumferential extension. Specifically, the thickness dimension: Tb of the upper thin portion 42 is preferably within a range between 0.10 mm and 0.20 mm, more preferably within a range between 0.13 mm and 0.17 mm. The thickness dimension: Tc of the lower thin portion 44 is preferably within a range between 0.10 mm and 0.20 mm, more preferably within a range between 0.13 mm and 0.17 mm. By so doing, foreign body sensation perceived when the thin portions 42, 44 wedge under the upper and lower eyelids can be reduced, and both of the thin portions 42, 44 may be assured to have strength sufficient to maintain shape retention properties of the lens. In the present embodiment in particular, the prescribed thickness dimension: Tb defining the circumferential left and right edges of the upper thin portion 42 is 0.14 mm, and the prescribed thickness dimension: Tc defining the circumferential left and right edges of the lower thin portion 44 is 0.14 mm, so that the thickness dimension: Tb of the upper thin portion 42 and the thickness dimension: Tc of the lower thin portion 44 are equal.

The differential between the thickness dimension: Tb of the upper thin portion 42 and the thickness dimension: Ta of the thick portions 50 is preferably within a range between 0.20 mm and 0.45 mm, more preferably within a range between 0.23 mm and 0.42 mm. It is possible thereby to effectively ensure adequate thickness or thinness of the thick portions 50 or the upper thin portion 42 relative to the other, and to effectively give rise to both pushing action of the upper eyelid on the thick portions 50 and tucking action of the upper thin portion 42, as well as to avoid an excessively steep rate of thickness change in the upper transition portions 52 as discussed later. In the present embodiment, the differential between Tb and Ta is 0.31 mm.

Meanwhile, the differential between the thickness dimension: Tc of the lower thin portion 44 and the thickness dimension: Ta of the thick portions 50 is preferably within a range between 0.20 mm and 0.45 mm, more preferably within a range between 0.23 mm and 0.42 mm. As with the upper thin portion 42 discussed above, it is possible thereby to effectively give rise to pushing action of the upper eyelid on the thick portions 50 and tucking action of the upper thin portion 42, as well as to avoid an excessively steep rate of thickness change in the lower transition portions 54 as discussed later. In the present embodiment, the differential between Tc and Ta is 0.31 mm.

In the present embodiment, the center angle: ε between the edges to the circumferential left and right sides of the upper thin portion 42 and the center angle: ζ between the edges to the circumferential left and right sides of the lower thin portion 44 about the lens geometric center axis 12 are equal, and the circumferential dimensions of the upper thin portion 42 and the lower thin portion 44 are equal; however, the circumferential dimensions of the upper thin portion 42 and the lower thin portion 44 could be different from one another. In this case, it is preferable that center angle: ε > center angle: ζ, that is, for the circumferential dimension of the lower thin portion 44 to be smaller than the circumferential dimension of the upper thin portion 42. With this arrangement it is easier to make the circumferential dimension of the lower thick portions 58 larger than the circumferential dimension of the upper thick portions 56. Also, making the circumferential dimension of the lower thin portion 44 smaller reduces the extent of wedging of the lower thin portion 44 under the lower eyelid, and allows the upper thin portion 42 overlapping the upper eyelid (which overlaps a larger area the contact lens 10 than does the lower eyelid and which has greater function during blinking) to be larger, so that wear comfort may be improved further.

According to the present embodiment described above, in the circumferential direction of the second periphery portion 30 thickness dimension: Ta represents the maximum thickness and thickness dimensions: Tb and Tc represent the minimum thickness, with ranges of thickness dimension: Ta constituting the thick portions 50, the range of thickness dimension: Tb constituting the upper thin portion 42, and the range of thickness dimension: Tc constituting the lower thin portion 44. Also, in the circumferential direction of the second periphery portion 30, the ranges of transition of thickness dimension from Ta to Tb (or from Tb to Ta) constitute the upper transition portions 52, and the ranges of transition of thickness dimension from Ta to Tc (or from Tc to Ta) constitute the lower transition portions 54. Consequently, the circumferential edge lying to the, thick portion 50 side of the upper transition portion 52 is defined by the thickness dimension: Ta, and the circumferential edge lying to the upper thin portion 42 side of the upper transition portion 52 is defined by the thickness dimension: Tb. Analogously, the circumferential edge lying to the thick portion 50 side of the lower transition portion 54 is defined by the thickness dimension: Ta, and the circumferential edge lying to the lower thin portion 44 side of the lower transition portion 54 is defined by the thickness dimension: Tc.

The upper transition portions 52 are formed at both circumferential sides of the upper thin portion 42 and are symmetrical to one another with respect to the plumb radial direction line 14 therebetween, and have varying thickness dimensions that are progressively larger in the circumferential direction going from the respective circumferential left and right edges of the upper thin portion 42 towards the circumferential upper edges of the thick portions 50, thereby connecting the upper thin portion 42 to the thick portions 50. That is, the upper transition portions 52 have thickness dimensions that progressively change from Ta to Tb (or from Tb to Ta) in the circumferential direction of the second periphery portion 30.

The center angle: α between Tb and Ta at the circumferential upper and lower sides of the upper transition portion 52 about the lens geometric center axis 12 is preferably within a range of between 40 degrees and 60 degrees, more preferably within a range of between 45 degrees and 55 degrees. By so doing the upper transition portions 52 may be endowed with relatively gentle slope as discussed later to provide improved wear comfort, while at the same time ensuring ample circumferential dimension of the upper thin portion 42 in relative terms so that circumferential stability may be produced effectively through the action of the upper eyelid pushing against the upper thin portion 42. In the present embodiment, the center angle: α = 50 degrees.

In the upper transition portions 52, the rate of thickness change: (Ta - Tb)/α which is expressed as the ratio of the change in thickness dimension to circumferential length is preferably within a range between 0.30 × 10⁻² mm/degree and 1.0 × 10⁻² mm/degree, more preferably within a range between 0.35 × 10⁻² mm/degree and 0.80 × 10⁻² mm/degree, and ideally within a range between 0.40 × 10⁻² mm/degree and 0.70 × 10⁻² mm/degree. By so doing, the upper transition portions 52 may be endowed with relatively moderate rate of thickness change, and irritation resulting from contact against the upper eyelid may be minimized while at the same time ensuring pushing action by the upper eyelid, thus affording considerable concomitant improvement in circumferential stability and wear comfort. In the present embodiment, the rate of thickness change: (Ta - Tb)/α of the upper transition portions 52 is set to 0.62 × 10⁻² mm/degree.

In preferred practice the upper transition portions 52 smoothly connect to the upper thin portion 42 and the thick portions 50, and preferably have a smooth continuous shape devoid of edge-like inflection points at their connection points to the upper thin portion 42 and the thick portions 50 viewed in circumferential cross section of the second periphery portion 30. As depicted in FIG 4, the upper transition portions 52 in the present embodiment incorporate a circumferential center section 60 that extends in the circumferential direction at a substantially constant rate of thickness change; and connecting sections 62 situated at the circumferential edges of each upper transition portion 52 and having a variable rate of thickness change that progressively decreases closer towards the thick portions 50 and the upper thin portion 42 so as to connect smoothly to the thick portions 50 and the upper thin portion 42.

Meanwhile, the lower transition portions 54 are formed at both circumferential sides of the lower thin portion 44 and are symmetrical to one another with respect to the plumb radial direction line 14 therebetween, and have varying thickness dimensions becoming progressively larger in the circumferential direction going from the respective circumferential left and right edges of the lower thin portion 44 towards the circumferential lower edges of the thick portions 50, thereby connecting the lower thin portion 44 to the thick portions 50. That is, the lower transition portions 54 have thickness dimensions that progressively change from Ta to Tc (or from Tc to Ta) in the circumferential direction of the second periphery portion 30.

The center angle: β between Ta and Tc at the circumferential upper and lower sides of the lower transition portion 54 about the lens geometric center axis 12 is preferably within a range of between 30 degrees and 50 degrees, more preferably within a range of between 35 degrees and 45 degrees. If the center angle: β is less than 30 degrees, the lower transition portions 54 have excessively steep slope as discussed later, posing the risk of catching on the upper eyelid during blinking and resulting in unwanted rotation and a foreign object sensation, whereas if the center angle: P is greater than 50 degrees, the lower transition portions 54 may wedge to a considerable extent under the lower eyelid, making it difficult to achieve good wear comfort. In the present embodiment, the center angle: P = 30 degrees.

Accordingly, in the present embodiment, the center angle: β in the lower transition portions 54 is smaller than the center angle: α in the upper transition portions 52; and the circumferential dimension of the lower transition portions 54 is smaller than the circumferential dimension of the upper transition portions 52. Thus, the upper transition portions 52 may be endowed with longer circumferential dimension and a gradual slope, thereby reducing irritation arising from contact of the upper eyelid against the upper transition portions 52, while the lower transition portions 54 may be endowed with shorter circumferential dimension so as to reduce the extent of wedging under the lower eyelid and improve wear comfort.

In the lower transition portions 54, the rate of thickness-change: (Ta - Tc)/β which is expressed as the ratio of the change in thickness dimension to circumferential length is preferably within a range between 0.60 × 10⁻² mm/degree and 1.50 × 10⁻² mm/degree, more preferably within a range between 0.70 × 10⁻² mm/degree and 1.10 × 10⁻² mm/degree. If the rate of thickness change in the lower transition portions 54 is less than 0.60 × 10⁻² mm/degree, the slope of the lower transition portions 54 will be excessively gradual, making it difficult to produce the effect of preventing lens rotation through contact of the lower transition portions 54 against the upper edge of the lower eyelid, whereas if the rate of thickness change in the lower transition portions 54 exceeds 1.50 × 10⁻² mm/degree, the slope of the lower transition portions 54 will be excessively steep, posing a risk of catching on the upper eyelid during blinking and causing unwanted rotation or foreign object sensation. In the present embodiment, the rate of thickness change: (Ta - Tc)/β of the lower transition portions 54 is set to 1.03 × 10⁻² mm/degree.

In the present embodiment, the rate of thickness change: (Ta - Tc)/β of the lower transition portions 54 is greater than the rate of thickness change: (Ta - Tb)/α of the upper transition portions 52, and the slope of the lower transition portions 54 is steeper than the slope of the upper transition portions 52. In preferred practice, the differential between the rate of thickness change: (Ta - Tb)/α of the upper transition portions 52 and the rate of thickness change: (Ta - Tc)/β of the lower transition portions 54 is selected with a range between 0.10 × 10⁻² mm/degree and 0.60 × 10⁻² mm/degree. The reason is that if the differential between the rates of thickness change in the upper transition portions 52 and the lower transition portions 54 is less than 0.10 × 10⁻² mm/degree, the slope differential between the upper transition portions 52 and the lower transition portions 54 is excessively small, making it difficult to concomitantly produce an effect of reduced foreign body sensation owing to the upper eyelid smoothly crossing over the upper transition portions 52 which have relatively gentle slope, and an effect of preventing the relatively steep sloped lower transition portions 54 from wedging under the lower eyelid; whereas if the differential between the rates of thickness change in the upper transition portions 52 and the lower transition portions 54 exceeds 0.60 × 10⁻² mm/degree, the slope differential between the upper and lower sides of the thick portions 50 is excessively large and wear comfort tends to suffer. In the present embodiment in particular, by making the circumferential dimension of the lower transition portions 54 smaller than the circumferential dimension of the upper transition portions 52, it is a simple matter to make the lower transition portions 54 steeper than the upper transition portions 52. In the present embodiment, the differential between the rate of thickness change: (Ta - Tb)/α of the upper transition portions 52 and the rate of thickness change: (Ta - Tc)/β of the lower transition portions 54 set to 0.41 × 10⁻² mm/degree.

As shown in FIG. 4, analogously to the upper transition portions 52, the lower transition portions 54 have a circumferential center section 64 extending in the circumferential direction at a substantially constant rate of thickness change; and connecting sections 66 situated at the circumferential edges and having a variable rate of thickness change that progressively decreases closer towards the thick portions 50 and the lower thin portion 44 so as to connect smoothly to the thick portions 50 and the lower thin portion 44.

Further, as discussed previously, the contact lens 10 according to the present embodiment has smooth contours devoid of edge-like inflection points at a first junction 34 which is the point of connection of the optical portion 26 with the first periphery portion 28 and at a second junction 36 which is the point of connection of the first periphery portion 28 with the second periphery portion 30. Inside peripheral edge parts of the thick portions 50, the upper and lower thin portions 42, 44, and the upper and lower transition portions 52, 54 formed in the second periphery portion 30 thereby connect smoothly with the outside peripheral edge part of the optical portion 26; in the present embodiment, the first periphery portion 28 constitutes the radial transition portion.

The contact lens 10 according to the present embodiment depicted in FIGS. 1 to 3, by way of specific example, has an outside diameter dimension (DIA) of 14.5 mm. The shape of the lens rear face 18 is a combination of a spherical face having a curvature radius (base curve) of 8.60 mm with the lens geometric center axis 12 as the center of curvature, and a cylindrical lens face having cylindrical power of -1.25 diopter and whose cylinder axis lies in the horizontal direction, i.e. a cylinder axis angle of 180 degrees. Spherical contours are employed for the lens front face 16 of the optical portion 26, which is designed to have power (P) of -3.00 diopters.

The lens front face 16, inclusive of the optical portion 26 and the first periphery portion 28, is designed using a radial cross sectional profile of arcuate form in each zone along the circumference. The lens rear face 18 is designed with a smooth radial cross section devoid of inflection points and sharing a single tangent at both the first junction 34 and the second junction 36. The second periphery portion rear face 24 has a radial cross sectional shape that varies along the circumferential direction, yet has smooth continuous annular shape devoid of edge-like inflection points in the circumferential direction as well.

While it is possible for the contact lens 10 of the above design to be formed through direct cutting of block polymerization molded beforehand from appropriate material, considerations relating to throughput and consistent product quality make manufacture by a molding process advantageous.

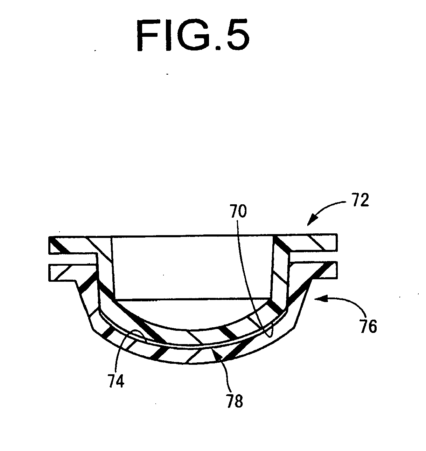

Specifically, in a typical preferred molding process as depicted in FIG. 5, using a male die 72 having a mold face 70 of aspherical convex contours corresponding to the lens rear face 18 and a female die 76 having a mold face 74 of spherical concave contours corresponding to the lens front face 16, the male and female dies 72, 76 are registered with one another to define a generally sealed mold cavity 78 between the mold faces 70, 74 of the two dies, in which prescribed polymerizable monomers are subjected to polymerization molding to produce the contact lens 10 furnished with the desired lens front and rear faces 16, 18.

The contact lens 10 in this instance is one having a lens front face 16 with spherical contours, and a lens rear face 18 with aspherical contours including an optical portion rear face 20, a first periphery portion rear face 22, and a second periphery portion rear face 24. Thus, the aspherical contours of the optical portion 26, as well as the thick portions 50, the upper and lower thin portions 42, 44, and the upper and lower transition portions 52, 54 may all be formed on the lens rear face 18. Consequently, by designing the mold face 70 of the male die 72 with appropriate contours for imparting the desired surface contours to the lens rear face 18, there is provided a male die 72 on which the optical portion 26, the thick portions 50, the upper and lower thin portions 42, 44, and the upper and lower transition portions 52, 54 have been arranged in proper positional alignment in the circumferential direction, allowing these circumferential locations to be produced with high accuracy.

Additionally, because the lens front face 16 is a spherical convex face, registration of the two dies 72, 76 in the circumferential direction is unnecessary. Also, even in instances where for example a series of contact lenses are manufactured with different cylinder axis angles of the optical portion 26, several different male dies 72 may be provided for imparting different shapes to the lens rear face 18, while using a common female die 76. For this reason, the desired contact lenses 10 may be produced advantageously with high accuracy and good process efficiency.

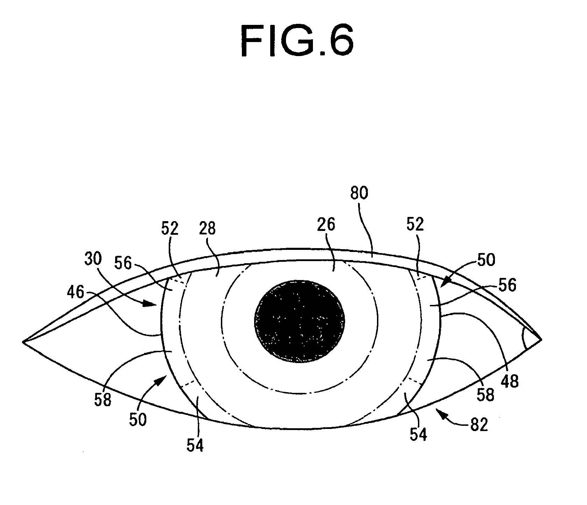

The contact lens 10 of the above design is intended to be worn on the surface of the cornea as depicted in FIG. 6. FIG. 6 depicts wear in the right eye. During wear of the contact lens 10 according to the present embodiment under these conditions, the pushing action of the eyelid (action of sliding the lens) exerted against the pair of thick portions 50 during blinking results in downward pushing force acting on the thick portions 50. The contact lens 10 may be rotated thereby and positioned at the intended circumferential position (the position depicted in FIG. 6, with the left and right edge portions 46, 48 positioned on the horizontal). In the present embodiment in particular, because the thick portions 50 are formed at the left and right of the contact lens 10 in the outside peripheral edge part of the periphery portion, the downward pushing force exerted on them during blinking acts at respective locations at the left and right away from the lens geometric center axis 12 of the contact lens 10, thereby providing excellent circumferential stability through counterbalancing pushing force at the left and right sides.

Moreover, according to the present embodiment, in the thick portions 50 the circumferential length of the lower thick portions 58 situated below the horizontal radial direction line 15 is greater than the circumferential length of the upper thick portions 56 situated above the horizontal radial direction line 15. Owing to this feature, downward pushing force during blinking may be exerted more effectively on the lower thick portions 58, thereby providing more consistent circumferential positioning of the contact lens 10. Circumferential position stability is also improved through counterbalance of the thick portions 50 formed at the left and right sides of the lens. As opposed to the case where, for example, only the lower thick portions 58 are formed below the horizontal radial direction line 15 so that the thick portions 50 extend only below the horizontal radial direction line 15, by forming the upper thick portions 56 situated above the horizontal radial direction line 15 in the thick portions 50 so that the thick portions 50 extend both to the upper and lower sides in the circumferential direction across the horizontal radial direction line 15 as taught in the present embodiment in particular, it is possible to ensure that the thick portions 50 constitute a sufficiently large proportion of mass with respect to total volume of the contact lens 10, and to do so without excessively large thickness dimension of the thick portions 50, so as to more advantageously achieve circumferential position stability through counterbalance of the thick portions 50.

Further, according to the present embodiment, upper transition portions 52 and lower transition portions 54 of progressively changing thickness dimensions are formed to the upper and lower sides of the thick portions 50 in the circumferential direction. Owing to provision of the upper transition portions 52, pushing action during blinking may be directed onto these upper transition portions 52 as well to provide further improvement in circumferential position stability. At the same time, because of the relatively moderate slope of the upper transition portions 52 there is less risk of the upper eyelid catching on the upper transition portions 52 or the thick portions 50 during blinking, resulting in unintentional rotation of the lens or in impaired wear comfort. Meanwhile, because the lower transition portions 54 have relatively steep slope, if unintentional rotation of the lens has occurred, further rotation may be prevented due to the lower transition portions 54 coming into contact against the upper edge of the lower eyelid. Also, by minimizing the extent of wedging of the thick portions 50 under the lower eyelid, the risk of reduced wear comfort resulting from the thick portions 50 wedging under the lower eyelid may be reduced.

Additionally, the second periphery portion 30 inclusive of the thick portions 50 and the upper and lower transition portions 52, 54 has a smooth surface devoid of edge-like inflection points both in the radial cross section and the circumferential cross section, thereby reducing the risk of the eyelid catching on the thick portions 50 or the upper and lower transition portions 52, 54 during blinking, and affording further improvement in wear comfort.

In the contact lens 10 constructed according to the present embodiment, the upper thin portion 42 and the lower thin portion 44 are formed at locations on the lens overlapped by the upper and lower eyelids 80, 82 when the eye is open, thereby reducing foreign body sensation and improving wear comfort. Additionally, in the present embodiment in particular, with the eye open, the edge of the upper eyelid 80 is positioned slightly above the circumferential upper edges of the thick portions 50 and the edge of the lower eyelid 82 is positioned slightly below the circumferential lower edges of the thick portions 50. Thus, according to the present embodiment, with the eye open and oriented in the normal position, the thick portions 50 are not overlapped by either eyelid 80, 82. In particular, it is known that a larger area of the cornea is covered by the upper eyelid 80 than by the lower eyelid 82. Thus, by making the circumferential dimension of the upper thick portions 56 of the thick portions 50 smaller than that of the lower thick portions 58 as taught in the present embodiment, one skillfully avoids a situation in which while the eye is open the thick portions 50 are constantly overlapped by the upper eyelid 80 (which covers a large area of the contact lens 10), thereby affording improved wear comfort. By also endowing the lower thick portions 58 with larger circumferential dimension, it is possible to effectively ensure that the thick portions 50 have ample circumferential dimensions, while also avoiding overlapping by the eyelids 80, 82.

Furthermore, according to the present embodiment the optical portion 26 is situated with the location of its gravity center on the lens geometric center axis 12, and lacks a localized region of thickness such as a prism, thereby advantageously avoiding the problem of adverse optical effects of prisms, as well as affording better wear comfort.

Also, if the contact lens 10 is inadvertently worn upside down, due to the increased range of overlap between the upper eyelid 80 and the lower thick portions 58 of larger circumferential dimension, the wearer will experience an odd sensation leading him to quickly ascertain that the lens is not worn correctly.

Additionally, due to the relatively steep slope of the lower transition portions 54, even if the contact lens 10 experiences downward displacement during blinking, overlapping of the lower eyelid 82 and the thick portions 50 may be minimized or avoided, thus affording improved wear comfort.

In this way, the contact lens 10 according to the present embodiment has been designed endowing the upper and lower thin portions 42, 44 and the thick portions 50 with contours that take into account the shape of the eye; and owing to the steeper slope of the lower transition portions 54 as compared with the upper transition portions 52, affords both good wear comfort and excellent circumferential stability.

While the present invention has been described in detail in its presently preferred embodiment, it is to be understood that the invention is by no means limited to the details of the illustrated embodiment.

For example, the specific optical characteristics and geometric shapes disclosed in the preceding embodiment are merely exemplary. Contact lenses having shapes according to the present invention may be adapted to any of various optical characteristics and geometric shapes that may be required to suit large numbers of contact lens wearers, through appropriate modification of values such as the outside diameter (DIA), the curvature radius (base curve) of the lens rear face 18, the optical characteristics of the optical portion 26, or the inside and outside diameters of the first and second periphery portions 28, 30; and in most instances are marketed commercially in the form of a series of different lenses with parameters that are graduated in appropriate steps.

It is not essential for the pair of thick portions 50, 50 provided at left and right of the lens to be symmetrical in shape, and it would be acceptable for the elevation angle: γ of the thick portion 50 formed to the left side of the lens to be a different size from the elevation angle: γ of the thick portion 50 formed to the right side of the lens, or for the depression angle: δ of the thick portion 50 formed to the left side of the lens to be a different size from the depression angle: δ of the thick portion 50 formed to the right side, respectively. For example, the distance separating the opposed upper and lower eyelids in the human eye tends to be smaller towards the nasal side than the temporal side with the eye in its usual open state, and thus by making the circumferential length (center angle) of the thick portion 50 that during wear of the lens is situated towards the nasal side correspondingly smaller than the circumferential length (center angle) of the thick portion 50 that is situated towards the temporal side, it is possible to further improve wear comfort and the accuracy of circumferential position afforded by action of the eyelids.

Furthermore, the shape of the optical portion is not limited to one that is horizontally symmetric in relation to the plumb radial direction line 14, and it would be possible in the case of a bifocal lens for example to situate the near vision region on a bias towards the nasal side with respect to the far vision region during lens wear, to effectively implement the present invention in a contact lens of this type as well.

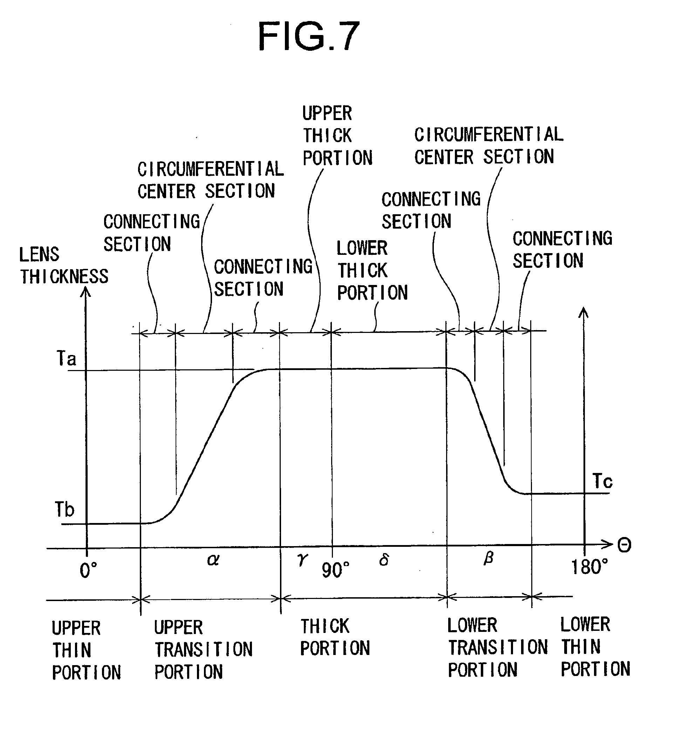

In the preceding embodiment, the thickness dimension: Tb of the upper thin portion 42 and the thickness dimension: Tc of the lower thin portion 44 are equal to one another; however, Tb and Tc may differ as depicted in model form in FIG. 7. In this instance, it is preferable for the boundary thickness dimension: Tb of the upper thin portion 42 to be smaller than the boundary thickness dimension: Tc of the lower thin portion 44. That is, because the upper eyelid covers a larger area of the cornea than does the lower eyelid, by making the upper thin portion 42 thinner it may be possible to further reduce irritation of the upper eyelid and further improve wear comfort.

Further, the radial width dimensions of the upper and lower thin portions 42, 44, the thick portions 50, and the upper and lower transition portions 52, 54 need not be unchanging, nor must they be equal in size to one another. For example, the radial width dimensions of the upper and lower thin portions 42, 44 may be progressively smaller going towards both the left and right sides in the circumferential direction from the upper and lower edge parts 38, 40; or the radial width dimensions of the thick portions 50 may be smaller than the radial width dimensions of the upper and lower thin portions 42, 44.

In the preceding embodiment, the lens rear face 18 is given an aspherical face in order to form the optical portion 26, the upper and lower thin portions 42, 44, and the thick portions 50; however, the lens rear face 18 may instead be a spherical face while giving the lens front face 16 an aspherical face in order to form the optical portion 26 aspherical face as well as the upper and lower thin portions 42, 44, and the thick portions 50 on the lens front face 16.

While not set forth exhaustively herein, it is to be understood that various modifications, alterations, and improvements of the present invention may be recognized by those skilled in the art to arrive at yet other modes of the invention, and that such modes are considered to fall within the scope of the present invention as defined in the attached claims.

Test specimens described below were prepared by way of contact lenses constructed according to the present invention, and were subjected to comparative tests regarding orientation of the axis during wear and wear comfort, the results of which are indicated below.

### (Example 1)

First, a contact lens constructed according to the present invention was prepared by way of a first example. Lens parameters in Example 1 were: outside diameter (DIA) = 14.5 mm; base curve (B.C.) = 8.60 mm; cylinder power: -1.25 diopter; cylinder axis angle (Ax): 180 degrees; power (P) = -3.00 diopters. A toric face was produced on the lens rear face.

Also, in the contact lenses of Example 1, about the lens geometric center axis, the center angle between the circumferential edge of the upper thin portion and the lens upper edge (angle: ε/2 in FIG. 1; i.e. 90 - α - γ) was 20 degrees; the center angle of the upper transition portion (angle: α in FIG. 1) was 50 degrees; the elevation angle of the upper edge of the thick portion (angle: γ in FIG. 1) was 20 degrees; the depression angle of the lower edge of the thick portion (angle: δ in FIG. 1) was 40 degrees; the center angle of the lower transition portion (angle: β in FIG. 1) was 30 degrees; and the center angle between the circumferential edge of the lower thin portion and the lens lower edge (angle: ζ/2 in FIG. 1; i.e. 90 - β - δ) was 20 degrees.

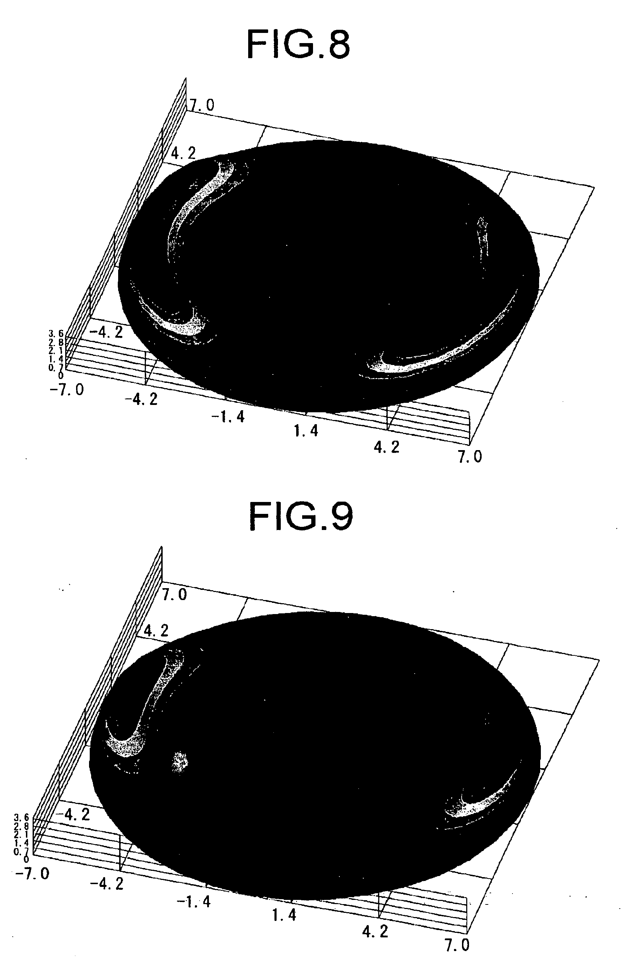

Also, the thickness dimension of the thick portions (equivalent to the thickness dimension at the boundaries with the upper and lower transition portions to either circumferential side of the thick portion) Ta = 0.45 mm; while the thickness dimension of the upper thin portion (equivalent to the thickness dimension at the boundaries with the upper transition portions to either circumferential side of the upper thin portion): Tb and the thickness dimension of the lower thin portion (equivalent to the thickness dimension at the boundaries with the lower transition portions to either circumferential side of the lower thin portion): Tc were Tb = Tc = 0.14 mm. The thick portions and the upper and lower thin portions are formed on the lens rear face, with the thick portions and the upper and lower thin portions having unchanging thickness dimensions in the circumferential direction. Thus, in Example 1, Ta represents maximum thickness in the lens circumferential direction, whereas Tb and Tc represent minimum thickness of the periphery portion in the lens circumferential direction, with the differential between maximum thickness and minimum thickness being 0.31 mm. The rate of thickness change (Ta - Tb)/α of the upper transition portions is 0.62 × 10⁻² mm/degree, while the rate of thickness change (Ta - Tc)/β of the lower transition portions is 1.03 × 10⁻² mm/degree, so that the rate of thickness change in the lower transition portions is greater than the rate of thickness change in the upper transition portions, the differential being 0.41 mm × 10⁻² mm/degree. FIG. 8 depicts the thickness distribution of Example 1 in birds eye view.

For Comparative Examples 1 to 3, contact lenses provided with no differential between the rate of thickness change in the upper transition portions and the rate of thickness change in the lower transition portions were prepared, as indicated below.

### (Comparative Example 1)

The contact lens of Comparative Example 1 differs from that of Example 1 in that about the lens geometric center axis, the center angle of the upper transition portion (angle: α in FIG. 1) is 70 degrees, the elevation angle of the upper edge of the thick portion (angle: γ in FIG. 1) is 0 degrees, the depression angle of the lower edge of the thick portion (angle: δ in FIG 1) is 0 degrees, and the center angle of the lower transition portion (angle: β in FIG. 1) is 70 degrees; the structure is otherwise identical to Example 1. In Comparative Example 1 in particular, the elevation angle and depression angle of the upper and lower edges of the thick portions is 0 degrees, meaning that thick portions extending in the circumferential direction with unchanging thickness dimension are not present. Consequently, in Comparative Example 1, the upper transition portion and the lower transition portion connect directly to one another at their edges on the opposite side from the thin portions, with the thickness dimension at these edges representing maximum thickness dimension in the lens circumferential direction. Thus, in Comparative Example 1 the rate of thickness change (Ta - Tb)/α of the upper transition portion is 0.44 × 10⁻² mm/degree, while the rate of thickness change (Ta - Tc)/β of the lower transition portion is 0.44 × 10⁻² mm/degree, so that the rate of thickness change in the upper transition portion and the rate of thickness change in lower transition portion are equal. FIG 9 depicts the thickness distribution of Comparative Example 1 in birds eye view.

### (Comparative Example 2)

The contact lens according to Comparative Example 2 differs from that according to Example 1 in that about the lens geometric center axis, the center angle of the upper transition portion (angle: α in FIG. 1) is 50 degrees, the elevation angle of the upper edge of the thick portion (angle: γ in FIG. 1) is 20 degrees, the depression angle of the lower edge of the thick portion (angle: δ in FIG. 1) is 20 degrees, and the center angle of the lower transition portion (angle: β in FIG. 1) is 50 degrees; the structure is otherwise identical to Example 1. In Comparative Example 2 in particular, the upper edges of the upper transition portion and the thick portion have the same elevation angle as in Example 1, but in Example 1 the thick portion extends to the lower side to a greater extent than in Comparative Example 2. Thus, in Comparative Example 2 the rate of thickness change (Ta - Tb)/α in the upper transition portion is 0.62 × 10⁻² mm/degree and the rate of thickness change (Ta - Tc)/β in the lower transition portion is 0.62 × 10⁻² mm/degree, so that the rate of thickness change in the upper transition portion and the rate of thickness change in lower transition portion are equal.

### (Comparative Example 3)

The contact lens of Comparative Example 3 differs from that of Example 1 in that about the lens geometric center axis, the center angle of the upper transition portion (angle: α in FIG. 1) is 40 degrees, the elevation angle of the upper edge of the thick portion (angle: γ in FIG. 1) is 30 degrees, the depression angle of the lower edge of the thick portion (angle: δ in FIG. 1) is 30 degrees, and the center angle of the lower transition portion (angle: β in FIG. 1) is 40 degrees; the structure is otherwise identical to Example 1. Thus, in Comparative Example 3 the rate of thickness change (Ta - Tb)/α in the upper transition portion is 0.78 × 10⁻² mm/degree and the rate of thickness change (Ta - Tc)/β in the lower transition portion is 0.78 × 10⁻² mm/degree, so that the rate of thickness change in the upper transition portion and the rate of thickness change in lower transition portion are equal.

The total of four types of contact lenses prepared in Example 1 and Comparative Examples 1 to 3 were worn for a brief period of about 20 minutes by 21 individuals (42 eyes), during which time the extent of slope of the axis was measured and wear comfort was investigated, the results of which are tabulated in Table 1 below.

**[Table 1]**

| | Ex. 1 | Cmp. Ex. 1 | Cmp. Ex. 2 | Cmp. Ex. 3 |
|---|---|---|---|---|
| Upper thin portion: 90-α-γ (°) | 20 | ← | ← | ← |
| Upper transition portion: α (°) | 50 | 70 | 50 | 40 |
| Upper thick portion: γ (°) | 20 | 0 | 20 | 30 |
| Lower thick portion: δ (°) | 40 | 0 | 20 | 30 |
| Lower transition portion: β (°) | 30 | 70 | 50 | 40 |
| Lower thin portion: 90-β-δ (°) | 20 | ← | ← | ← |
| Max. thickness (mm) | 0.45 | ← | ← | ← |
| Min. thickness (mm) | 0.14 | ← | ← | ← |
| Max. thickness diff. (mm) | 0.31 | ← | ← | ← |
| Upper transition portion change rate (× 10⁻² mm/°) | 0.62 | 0.44 | 0.62 | 0.78 |
| Lower transition portion change rate (× 10⁻² mm/°) | 1.03 | 0.44 | 0.62 | 0.78 |
| Change rate diff. (×10⁻² mm/°) | 0.41 | 0.00 | 0.00 | 0.00 |
| Axis slope (≤ 5°) | 67% | 32% | 48% | 38% |
| Axis slope (≤ 10°) | 84% | 56% | 77% | 74% |
| Axis slope (≤ 15°) | 91% | 78% | 84% | 84% |
| No problems whatsoever Serviceable wear comfort | 68% | 78% | 60% | 60% |
| Slight discomfort, but serviceable wear comfort | 28% | 22% | 33% | 40% |
| Noticeable discomfort to the point of not wanting to wear | 5% | 0% | 8% | 0% |
| Discomfort sufficient to render unserviceable | 0% | 0% | 0% | 0% |

The arrow symbols appearing in Table 1 and in Table 2 below indicate values identical to those in Example 1. As will be apparent from the axis slope values shown in Table 1, Example 1 affords better axis stability (circumferential position stability) than any of the Comparative Examples. Meanwhile, with regard to wear comfort, while Example 1 is somewhat inferior to Comparative Example 1, axis stability in Comparative Example 1 is markedly inferior to that in Example 1. This demonstrates that introducing a differential between the rate of thickness change in the upper transition portions and the rate of thickness change in the lower transition portions affords high levels of axis stability and wear comfort.

The fact that axis stability is lowest in Comparative Example 1, which lacks thick portions extending with unchanging dimension in the circumferential direction, demonstrates that axis stability is improved by providing thick portions extending with unchanging dimension in the circumferential direction. A comparison of Example 1 and Comparative Example 2 shows that Example 1 affords better axis stability. This demonstrates that for a given elevation angle of the thick portion, axis stability improves with increasing depression angle. Likewise a comparison of Example 1 and Comparative Example 3 shows that Example 1 affords better axis stability. This demonstrates that for a given circumferential dimension (center angle) of the thick portion (in both Example 1 and Comparative Example 2, elevation angle + depression angle = 60 degrees), axis stability improves with increasing depression angle.

It is further notable from a comparison of Comparative Example 2 and Example 1 that the circumferential dimension of the thick portions which represent zones of maximum thickness in the lens periphery portion is larger in Example 1 than in Comparative Example 2. Specifically, whereas the center angle (γ + δ) of the thick portions in Comparative Example 2 is 40 degrees, the center angle (γ + δ) of the thick portions in Example 1 is 60 degrees. Moreover, the circumferential dimensions of the upper and lower thin portions in Comparative Example 2 and Example 1 are the same. Notwithstanding, Example 1 received a better evaluation for wear comfort than did Comparative Example 2.

This is attributed to the fact that in Example 1 as opposed to Comparative Example 2, in accordance with the teachings of the present invention the thick portions extend further downward than upward, and the thickness dimension of the lower transition portions has a large rate of change in the circumferential direction. Additionally, in Example 1 the accuracy of circumferential positioning is markedly improved relative to Comparative Example 2, as noted earlier. Accordingly, from a comparison of Comparative Example 2 and Example 1 it will be appreciated that the technical advantages of the present invention are attained based on the characteristic feature of the invention of "a feature combining extending in the lens downward direction thick portions which are provided at the left and right sides of the lens, with establishing different relative slope angles for upper transition portions and lower transition portions which are disposed to both the circumferential upper and lower sides of the thick portions".

As noted above, the results of evaluating the contact lenses of Example 1 and Comparative Examples 1 to 3 demonstrate that the concomitant improvement in circumferential position stability and wear comfort afforded by the contact lens constructed in accordance with the present invention is in fact a unique technical advantage over contact lenses constructed according to the prior art.

Next, as a second example, a contact lens having a differential between the rate of thickness change in the upper transition portions and the rate of thickness change in the lower transition portions that is different from that in Example 1 was prepared.

### (Example 2)

The contact lens of Example 2 differs from Example 1 in that the boundary thickness dimension: Ta defining the upper and lower edges of the thick portions is 0.55 mm, but construction is otherwise identical to Example 1. Consequently, in Example 2 the difference between maximum thickness and minimum thickness is 0.41 mm, the rate of thickness change (Ta - Tb)/α in the upper transition portion is 0.82 × 10⁻² mm/degree and the rate of thickness change (Ta - Tc)/β in the lower transition portion is 1.37 × 10⁻² mm/degree. As a result, in Example 2 the differential between the rate of thickness change in the upper transition portion and the rate of thickness change in the lower transition portion is 0.55 × 10⁻² mm/degree.

Contact lenses prepared according to Example 2 were worn for a brief period of about 20 minutes by 21 individuals (42 eyes), during which time the extent of slope of the axis was measured and wear comfort was investigated, the results of which are tabulated in Table 2 below, together with those for Example 1.

**[Table 2]**

| | Ex. 1 | Ex. 2 |
|---|---|---|
| Upper thin portion: 90-α-γ (°) | 20 | ← |
| Upper transition portion: α (°) | 50 | ← |
| Upper thick portion: γ (°) | 20 | ← |
| Lower thick portion: δ (°) | 40 | ← |
| Lower transition portion: β (°) | 30 | ← |
| Lower thin portion: 90-β-δ (°) | 20 | ← |
| Max. thickness (mm) | 0.45 | 0.55 |
| Min. thickness (mm) | 0.14 | ← |
| Max. thickness diff. (mm) | 0.31 | 0.41 |
| Upper transition portion change | 0.62 | 0.82 |
| rate (× 10⁻² mm/°) | | |
| Lower transition portion change rate (×10⁻² mm/°) | 1.03 | 1.37 |
| Change rate diff. (×10⁻² mm/°) | 0.41 | 0.55 |
| Axis slope (≤ 5°) | 67% | 60% |
| Axis slope (≤ 10°) | 84% | 88% |
| Axis slope (≤ 15°) | 91% | 95% |
| No problems whatsoever Serviceable wear comfort | 68% | 40% |
| Slight discomfort, but serviceable wear comfort | 28% | 58% |
| Noticeable discomfort to the point of not wanting to wear | 5% | 3% |
| Discomfort sufficient to render unserviceable | 0% | 0% |

As the results in Table 2 in addition to the results in Table 1 clearly show that for Example 2 as well, in which the maximum thickness dimension of the thick portions constituting zones of maximum thickness in the periphery portion is relatively larger than in the Comparative Examples, performance rated as having "serviceable wear comfort" was adequately ensured; and in Example 2 as in Example 1, marked improvement with regard to "circumferential stability (axis stability) during wear" as compared with the Comparative Examples was attained.

Moreover, an examination of the results in Table 2 in addition to the results in Table 1 above it will be appreciated that in Example 2, despite the rate of thickness change in both the upper and lower transition portions being larger than in the Comparative Examples, "serviceable wear comfort" was adequately ensured; and on the basis of the action of the upper and lower transition portions thusly endowed with greater rates of thickness change, marked improvement in stability of circumferential positioning as compared with the Comparative Examples was observed.

## Claims

1. A contact lens (10) including an optical portion (26) in a center section and a periphery portion (31) situated peripherally thereto, wherein:
the optical portion (26) is formed on front and rear surfaces devoid of a biased center of gravity resulting from creating a prism;
the periphery portion (31) is provided with an upper thin portion (42) and a lower thin portion (44) formed to respectively extend with unchanging thickness dimension in a circumferential direction in sections that during wear are situated in opposition in a vertical direction, while being provided with a pair of thick portions (50) having greater thickness dimension than the thin portions (42, 44), which are formed to respectively extend with unchanging thickness dimension in the circumferential direction in sections that during wear are situated in opposition in a horizontal direction;
the pair of thick portions (50) each extend in the circumferential direction to both upper and lower sides across a horizontal radial direction line (15) that during wear extends in the horizontal direction, with the thick portions (50) extending for a greater distance to the lower side than to the upper side of the horizontal radial direction line (15), thereby biasing downward a location of a gravity center of the thick portion (50);
upper transition portions (52) are provided in sections to both circumferential sides of the upper thin portion (42) such that the upper transition portions (52) become progressively thinner going in the circumferential direction towards the upper thin portion (42) from upper edges of the thick portions (50), respectively;
lower transition portions (54) are provided in sections to both circumferential sides of the lower thin portion (44) such that the lower transition portions (54) become progressively thinner going in the circumferential direction towards the lower thin portion (44) from lower edges of the thick portions (50), respectively;
the contact lens being **characterised in that**:
the value of rate of thickness change in each lower transition portion (54) expressed as a ratio of change in thickness dimension to circumferential length thereof, is greater than the value of rate of thickness change in each upper transition portion (52) expressed as the ratio of change in thickness dimension to circumferential length thereof; and
center angle: α of the upper transition portions (52) about the lens center axis (12) is within a range between 40 degrees and 60 degrees, and a center angle: β of the lower transition portions (54) about the lens center axis (12) is within a range between 30 degrees and 50 degrees.

2. The contact lens (10) according to claim 1, wherein a center angle: β of the lower transition portions (54) about a lens center axis (12) is smaller than a center angle: α of the upper transition portions (52).

3. The contact lens (10) according to either one of claims 1 and 2, wherein an elevation angle: γ of the circumferential upper edge of the thick portions (50) about the lens center axis (12) with respect to the horizontal radial direction line (15) is within a range between 10 degrees and 30 degrees, and a depression angle: δ of the circumferential lower edge of the thick portions (50) about the lens center axis (12) with respect to the horizontal radial direction line (15) is within a range between 20 degrees and 60 degrees.

4. The contact lens (10) according to any one of claims 1 to 3, wherein a differential between a thickness dimension: Ta in the thick portions (50) and a thickness dimension: Tb in the upper thin portion (42) lies in a range between 0.20 mm and 0.45 mm.

5. The contact lens (10) according to any one of claims 1 to 4, wherein a differential between the thickness dimension: Ta in the thick portions (50) and a thickness dimension: Tc in the lower thin portion (44) lies in a range between 0.20 mm and 0.45 mm.

6. The contact lens (10) according to any one of claims 1 to 5, wherein the thickness dimension: Ta in the thick portions (50) lies in a range between 0.30 mm and 0.55 mm.

7. The contact lens (10) according to any one of claims 1 to 6, wherein the thickness dimension: Tb in the upper thin portion (42) lies in a range between 0.10 mm and 0.20 mm, and the thickness dimension: Tc in the lower thin portion (44) lies in a range between 0.10 mm and 0.20 mm.

8. The contact lens (10) according to any one of claims 1 to 7, wherein the thickness dimension: Tb of the upper thin portion (42) is smaller than the thickness dimension: Tc of the lower thin portion (44).

9. The contact lens (10) according to any one of claims 1 to 8, wherein the rate of thickness change in the upper transition portions (52) in the circumferential direction about the lens center axis (12) lies in a range between 0.30 × 10⁻² mm/degree and 1.0 × 10⁻² mm/degree.

10. The contact lens (10) according to any one of claims 1 to 9, wherein the rate of thickness change in the lower transition portions (54) in the circumferential direction about the lens center axis (12) lies in a range between 0.60 × 10⁻² mm/degree and 1.50 × 10⁻² mm/degree.

11. The contact lens (10) according to any one of claims 1 to 10, wherein a differential between the rate of thickness change in the upper transition portions (52) in the circumferential direction and the rate of thickness change in the lower transition portions (54) in the circumferential direction about the lens center axis (12) lies in a range between 0.10 × 10⁻² mm/degree and 0.60 × 10⁻² mm/degree.

12. The contact lens (10) according to any one of claims 1 to 11, wherein the periphery portion (31) is formed within a range of between 0.5 mm and 2.0 mm from an lens outside peripheral edge in a lens radial direction.

13. The contact lens (10) according to any one of claims 1 to 12, wherein the upper transition portions (52) and the lower transition portions (54) are respectively composed of a circumferential center section (60, 64) having a constant rate of thickness change in the circumferential direction about the lens center axis (12), and connecting sections (62, 66) situated to either circumferential side of the circumferential center section (60, 64) and having a variable rate of thickness change that progressively decreases in the circumferential direction so as to connect smoothly with the thick portions (50) and with the thin portions (42, 44) respectively.

## Patentansprüche

1. Kontaktlinse (10) mit einem optischen Abschnitt (26) in einem zentralen Bereich und einem Randabschnitt (31), der randseitig dazu angeordnet ist, wobei:
der optische Abschnitt (26) auf einer Vorderfläche und einer Rückfläche ohne einen verlagerten Schwerpunkt, der auf die Erzeugung eines Prismas zurückzuführen ist, gebildet ist;
der Randabschnitt (31) mit einem oberen dünnen Abschnitt (42) und einem unteren dünnen Abschnitt (44) versehen ist, die jeweils so gebildet sind, dass sie sich mit einer unveränderten Dickenabmessung in Umfangsrichtung in Bereiche erstrecken, die während des Tragens in einer vertikalen Richtung gegenüberliegend angeordnet sind, wobei sie mit einem Paar dicker Abschnitte (50) versehen sind, die eine größere Dickenabmessung als die dünnen Abschnitte (42, 44) haben, die so gebildet sind, dass sie sich jeweils mit unveränderter Dickenabmessung in Umfangsrichtung in Bereiche erstrecken, die während des Tragens in einer horizontalen Richtung gegenüberliegend angeordnet sind;
das Paar dicker Abschnitte (50) sich jeweils in Umfangsrichtung zu der oberen und zu der unteren Seite über eine horizontale Linie (15) in radialer Richtung, die sich während des Tragens in der horizontalen Richtung erstreckt, erstrecken, wobei sich die dicken Abschnitte (50) über eine größere Entfernung zu der unteren Seite als zu der oberen Seite der horizontalen Linie (15) in radialer Richtung erstrecken, wodurch ein Ort eines Schwerpunkts des dicken Abschnitts (50) nach unten verlagert wird;
obere Übergangsabschnitte (52) in Bereichen zu beiden Umfangsseiten des oberen dünnen Abschnitts (42) so vorgesehen sind, dass die oberen Übergangsabschnitte (52) in Umfangsrichtung in Richtung des oberen dünnen Abschnitts (42) von oberen Kanten der dicken Abschnitte (50) jeweils schrittweise dünner werden;
untere Übergangsabschnitte (54) in Bereichen zu beiden Umfangsseiten des unteren dünnen Abschnitts (44) so vorgesehen sind, dass die unteren Übergangsbereiche (54) in Umfangsrichtung in Richtung des unteren dünnen Abschnitts (44) von unteren Kanten der dicken Abschnitte (50) jeweils schrittweise dünner werden;
wobei die Kontaktlinse **dadurch gekennzeichnet ist, dass**:
der Wert der Dickenänderungsrate in jedem unteren Übergangsabschnitt (54) ausgedrückt als ein Verhältnis einer Änderung der Dickenabmessung zu der Umfangslänge größer als der Wert der Dickenänderungsrate in jedem oberen Übergangsabschnitt (52) ausgedrückt als das Verhältnis einer Änderung der Dickenabmessung zu der Umfangslänge ist, und
der Zentralwinkel α der oberen Übergangsabschnitte (52) um die Achse (12) des Linsenzentrums in einem Bereich von 40 Grad bis 60 Grad liegt und ein Zentralwinkel β der unteren Übergangsabschnitte (54) um die Achse (12) des Linsenzentrums in einem Bereich von 30 Grad bis 50 Grad liegt.

2. Kontaktlinse (10) nach Anspruch 1, wobei ein Zentralwinkel β der unteren Übergangsabschnitte (54) um eine Achse (12) des Linsenzentrums kleiner als ein Zentralwinkel α der oberen Übergangsabschnitte (52) ist.

3. Kontaktlinse (10) nach einem der Ansprüche 1 oder 2, wobei ein Erhebungswinkel γ der oberen Kante in Umfangsrichtung der dicken Abschnitte (50) um die Achse (12) des Linsenzentrums in Bezug auf die horizontale Linie (15) in radialer Richtung in einem Bereich von 10 Grad bis 30 Grad liegt und ein Vertiefungswinkel δ der unteren Kante in Umfangsrichtung der dicken Abschnitte (50) um die Achse (12) des Linsenzentrums in Bezug auf die horizontale Linie (15) in radialer Richtung in einem Bereich von 20 Grad bis 60 Grad liegt.

4. Kontaktlinse (10) nach einem der Ansprüche 1 bis 3, wobei eine Differenz zwischen einer Dickenabmessung Ta in den dicken Abschnitten (50) und einer Dickenabmessung Tb in dem oberen dünnen Abschnitt (42) in einem Bereich von 0,20 mm bis 0,45 mm liegt.

5. Kontaktlinse (10) nach einem der Ansprüche 1 bis 4, wobei eine Differenz zwischen der Dickenabmessung Ta in den dicken Abschnitten (50) und einer Dickenabmessung Tc in dem unteren dünnen Abschnitt (44) in einem Bereich von 0,20 mm bis 0,45 mm liegt.

6. Kontaktlinse (10) nach einem der Ansprüche 1 bis 5, wobei die Dickenabmessung Ta in den dicken Abschnitten (50) in einem Bereich von 0,30 mm bis 0,55 mm liegt.

7. Kontaktlinse (10) nach einem der Ansprüche 1 bis 6, wobei die Dickenabmessung Tb in dem oberen dünnen Abschnitt (42) in einem Bereich von 0,10 mm bis 0,20 mm liegt und wobei die Dickenabmessung Tc in dem unteren dünnen Abschnitt (44) in einem Bereich von 0,10 mm bis 0,20 mm liegt.

8. Kontaktlinse (10) nach einem der Ansprüche 1 bis 7, wobei die Dickenabmessung Tb des oberen dünnen Abschnitts (42) kleiner als die Dickenabmessung Tc des unteren dünnen Abschnitts (44) ist.

9. Kontaktlinse (10) nach einem der Ansprüche 1 oder 8, wobei die Dickenänderungsrate in den oberen Übergangsbereichen (52) in Umfangsrichtung um die Achse (12) des Linsenzentrums in einem Bereich von 0,30 × 10⁻² mm/Grad bis 1,0 × 10⁻² mm/Grad liegt.

10. Kontaktlinse (10) nach einem der Ansprüche 1 oder 9, wobei die Dickenänderungsrate in den unteren Übergangsbereichen (54) in Umfangsrichtung um die Achse (12) des Linsenzentrums in einem Bereich von 0,60 × 10⁻² mm/Grad bis 1,50 × 10⁻² mm/Grad liegt.

11. Kontaktlinse (10) nach einem der Ansprüche 1 bis 10, wobei eine Differenz zwischen der Dickenänderungsrate in den oberen Übergangsbereichen (52) in Umfangsrichtung und einer Dickenänderungsrate in den unteren Übergangsabschnitten (54) in Umfangsrichtung um die Achse (12) des Linsenzentrums in einem Bereich von 0,10 × 10⁻² mm/Grad bis 0,60 × 10⁻² mm/Grad liegt.

12. Kontaktlinse (10) nach einem der Ansprüche 1 bis 11, wobei der Randabschnitt (31) in einem Bereich von 0,5 mm bis 2,0 mm von einer Außenrandkante der Linse in eine radiale Richtung der Linse gebildet ist.

13. Kontaktlinse (10) nach einem der Ansprüche 1 bis 12, wobei die oberen Übergangsabschnitte (52) und die unteren Übergangsabschnitte (54) jeweils aus einem Zentralbereich (60, 64) in Umfangsrichtung mit einer konstanten Dickenänderungsrate in Umfangsrichtung um die Achse (12) des Linsenzentrums und Verbindungsbereichen (62, 66) zusammengesetzt sind, die sich in Umfangsrichtung auf beiden Seiten des Zentralbereichs (60, 64) in Umfangsrichtung befinden und eine veränderliche Dickenänderungsrate aufweisen, die in Umfangsrichtung fortschreitend abnimmt, so dass sie jeweils mit den dicken Abschnitten (50) und mit den dünnen Abschnitten (42, 44) übergangslos verbunden sind.

## Revendications

1. Lentille de contact (10) comportant une partie optique (26) dans un segment central et une partie périphérique (31) située sur le pourtour de celle-ci, dans laquelle :
la partie optique (26) est formée sur des surfaces avant et arrière dépourvues de centre de gravité décalé du fait de la création d'un prisme ;
la partie périphérique (31) est pourvue d'une partie mince supérieure (42) et d'une partie mince inférieure (44) formées pour s'étendre respectivement avec une dimension d'épaisseur invariable dans une direction circonférentielle dans des secteurs qui, pendant le port de la lentille, sont situés de façon opposée dans une direction verticale, tout en étant pourvue d'une paire de parties épaisses (50) ayant une dimension d'épaisseur plus grande que celle des parties minces (42, 44), qui sont formées pour s'étendre respectivement avec une dimension d'épaisseur invariable dans la direction circonférentielle dans des segments qui, pendant le port de la lentille, sont situés de façon opposée dans une direction horizontale ;
la paire de parties épaisses (50) s'étendent chacune dans la direction circonférentielle vers les deux côtés supérieur et inférieur en travers d'une ligne horizontale (15) à orientation radiale qui, pendant le port de la lentille, s'étend dans la direction horizontale, les parties épaisses (50) s'étendant sur une plus grande distance du côté inférieur que du côté supérieur de la ligne horizontale (15) à orientation horizontale, repoussant ainsi vers le bas une position d'un centre de gravité de la partie épaisse (50) ;
des parties de transition supérieures (52) sont disposées dans des segments sur les deux côtés circonférentiels de la partie mince supérieure (42) de façon que les parties de transition supérieures (52) s'amincissent progressivement dans la direction circonférentielle vers la partie mince supérieure (42) respectivement depuis des bords supérieurs des parties épaisses (50) ;
des parties de transition inférieures (54) sont disposées dans des segments sur les deux côtés circonférentiels de la partie mince inférieure (44) de façon que les parties de transition inférieures (54) s'amincissent progressivement dans la direction circonférentielle vers la partie mince inférieure (44) respectivement depuis des bords inférieurs des parties épaisses (50) ;
la lentille de contact étant **caractérisée en ce que** :
la valeur du taux de variation d'épaisseur dans chaque partie de transition inférieure (54), exprimée sous la forme d'un rapport de variation de dimension d'épaisseur à la longueur circonférentielle de celle-ci, est supérieure à la valeur du taux de variation d'épaisseur dans chaque partie de transition supérieure (52), exprimée sous la forme du rapport de variation de dimension d'épaisseur à la longueur circonférentielle de celle-ci ; et
l'angle au centre : α des parties de transitions supérieures (52) autour de l'axe central (12) de la lentille a une valeur de 40 degrés à 60 degrés, et un angle au centre : P des parties de transition inférieures (54) autour de l'axe central (12) de la lentille a une valeur de 30 degrés à 50 degrés.

2. Lentille de contact (10) selon la revendication 1, dans laquelle un angle au centre : β des parties de transition inférieures (54) autour d'un axe central (12) de la lentille est inférieur à un angle central : α des parties de transition supérieures (52).

3. Lentille de contact (10) selon l'une ou l'autre des revendications 1 et 2, dans laquelle un angle d'élévation : γ du bord périphérique supérieur des parties épaisses (50) autour de l'axe central (12) de la lentille par rapport à la ligne horizontale (15) à orientation radiale a une valeur de 10 degrés à 30 degrés et un angle d'élévation : δ du bord périphérique inférieur des parties épaisses (50) autour de l'axe central (12) de la lentille par rapport à la ligne horizontale (15) à orientation radiale a une valeur de 20 degrés à 60 degrés.

4. Lentille de contact (10) selon l'une quelconque des revendications 1 à 3, dans laquelle une différence entre une dimension d'épaisseur : Ta dans les parties épaisses (50) et une dimension d'épaisseur : Tb dans la partie mince supérieure (42) a une valeur de 0,20 mm à 0,45 mm.

5. Lentille de contact (10) selon l'une quelconque des revendications 1 à 4, dans laquelle une différence entre une dimension d'épaisseur : Ta dans les parties épaisses (50) et une dimension d'épaisseur : Tc dans la partie mince inférieure (44) a une valeur de 0,20 mm à 0,45 mm.

6. Lentille de contact (10) selon l'une quelconque des revendications 1 à 5, dans laquelle la dimension d'épaisseur : Ta dans les parties épaisses (50) a une valeur de 0,30 mm à 0,55 mm.

7. Lentille de contact (10) selon l'une quelconque des revendications 1à 6, dans laquelle la dimension d'épaisseur : Tb dans la partie mince supérieure (42) a une valeur de 0,10 mm à 0,20 mm et la dimension d'épaisseur : Tc dans la partie mince inférieure (44) a une valeur de 0,10 mm à 0,20 mm.

8. Lentille de contact (10) selon l'une quelconque des revendications 1 à 7, dans laquelle la dimension d'épaisseur : Tb de la partie mince supérieure (42) est inférieure à la dimension d'épaisseur : Tc de la partie mince inférieure (44).

9. Lentille de contact (10) selon l'une quelconque des revendications 1 à 8, dans laquelle le taux de variation d'épaisseur dans les parties de transition supérieures (52) dans la direction circonférentielle autour de l'axe central (12) de la lentille a une valeur de 0,30 x 10⁻² mm/degré à 1,0 x 10⁻² mm/degré.

10. Lentille de contact (10) selon l'une quelconque des revendications 1 à 9, dans laquelle le taux de variation d'épaisseur dans les parties de transition inférieures (54) dans la direction circonférentielle autour de l'axe central (12) de la lentille a une valeur de 0,60 x 10⁻² mm/degré à 1,50 x 10⁻² mm/degré.

11. Lentille de contact (10) selon l'une quelconque des revendications 1 à 10, dans laquelle une différence entre le taux de variation d'épaisseur dans les parties de transition supérieures (52) dans la direction circonférentielle et le taux de variation d'épaisseur dans les parties de transition inférieures (54) dans la direction circonférentielle autour de l'axe central (12) de la lentille a une valeur de 0,10 x 10⁻² mm/degré à 0,60 x 10⁻² mm/degré.

12. Lentille de contact (10) selon l'une quelconque des revendications 1 à 11, dans laquelle la partie périphérique (31) est formée dans les limites d'une distance de 0,5 mm à 2,0 mm par rapport à une lentille à l'extérieur du bord périphérique dans une direction radiale de la lentille.

13. Lentille de contact (10) selon l'une quelconque des revendications 1 à 12, dans laquelle les parties de transition supérieures (52) et les parties de transition inférieures (54) sont respectivement composées d'un segment périphérique central (60, 64) à taux de variation d'épaisseur constant dans la direction circonférentielle autour de l'axe central (12) de lentille et des segments de liaison (62, 66) situés sur l'un ou l'autre côté périphérique du segment circonférentiel central (60, 64) à taux de variation d'épaisseur variable qui diminue progressivement dans la direction circonférentielle afin d'être reliées harmonieusement respectivement aux parties épaisses (50) et aux parties minces (42, 44).
